# EUROPEAN PATENT SPECIFICATION

(11) **EP 1 661 131 B1**
(45) Date of publication and mention of the grant of the patent: **21.01.2009**
(21) Application number: 04783345.4
(22) Date of filing: 03.09.2004
(51) Int. Cl.: G11B 19/00, H04N 5/76, H04N 7/173, H04L 29/06

(54) **PORTABLE ENTERTAINMENT APPARATUS**
TRAGBARE UNTERHALTUNGSVORRICHTUNG
APPAREIL DE DIVERTISSEMENT PORTATIF

(30) Priority: 03.09.2003 US 499948 P
(43) Date of publication of application: 31.05.2006
(73) Proprietor: The DirecTV Group, Inc., El Segundo, CA 90245 (US)
(72) Inventor: WOLFE, Andrew, Los Gatos, CA 95032 (US)
(74) Representative: Skone James, Robert Edmund
(86) International application number: PCT/US2004/029060
(87) International publication number: WO 2005/024818

(56) References cited:
- US-A- 5 861 906
- US-A1- 2002 062 357
- US-A1- 2002 164 156
- PATENT ABSTRACTS OF JAPAN vol. 2002, no. 11, 6 November 2002 (2002-11-06) & JP 2002 202831 A (MATSUSHITA ELECTRIC IND CO LTD), 19 July 2002 (2002-07-19)

## Description

### REFERENCE TO RELATED APPLICATIONS

### BACKGROUND

### Field

The present invention relates generally to entertainment systems, and more specifically, to a portable entertainment apparatus that is used in conjunction with digital entertainment systems, such as digital video recorders or personal video recorders.

### Related Art

Digital entertainment systems, such as digital video recorders (DVRs) (otherwise know as personal video recorders (PVRs) and digital video disc (DVD) players, have received increased attention lately and have become popular. These digital entertainment systems are capable of reproducing video and audio content at a high quality as compared to conventional analog entertainment systems because the video and audio content may be digitally formatted. Digitally formatting video content also facilitates implementation of program guides, and manipulation of the video content by users.

Conventional DVRs typically receive video content either from a conventional video cable or through broadband connection, and then encode and store the received video content in compressed digital formats, such as motion-pictures-experts-group standard 2 ("MPEG-2"), for future retrieval by a user. In this manner, users are able to view high quality video content at any desired time without deterioration of image quality as compared with analog recording of video content. One example of a conventional DVR is the ReplayTV brand of DVR's provided by Digital Networks North America headquartered in Santa Clara, California.

One of the disadvantages of conventional DVRs is that they typically do not have a separate display, and thus, require a separate display system, such as a television set or computer monitor, to view recorded video content. In addition, the typical size of conventional DVR's is too large to be portable.

DVR users, however, may find it very useful and convenient if they could download at least part of the video content stored in the DVR to a portable entertainment apparatus, and enjoy the video content at a location remote from the DVR. For example, a user may desire to download a movie stored in a DVR to a portable entertainment apparatus, and then viewthe movie while traveling, just as one listens to music using a car audio system in conjunction with a portable MPEG Audio Layer 3 ("MP3") player or portable CD player.

Moreover, a user may desire to update the video content on portable entertainment apparatus with video content and DVR so that the video content does not become stale. In other words, a user may desire to synchronize the video content stored in the portable entertainment apparatus with that in the DVR at any of number of intervals, e.g., (i) once a day, (ii) once a week, (iii) after the video content on the portable entertainment apparatus has been viewed, and (iv) etc.

Therefore, there is a need for a personal entertainment apparatus that is portable and is operable to store at least a practical amount of video content, for example, one hour of video content, in digital format. There is also a need for a personal entertainment apparatus that can download video content from a conventional DVR. Furthermore, there is a need for synchronizing the video content stored in a portable entertainment apparatus with that of a DVR.

US Patent Publication Number 2002/164156 A1 discloses a low-cost portable digital video player that is designed to receive proprietary compressed data from a personal video recorder (PVR). The portable digital video player is connected to the PVR using an IEEE 1394 communications link to download content.

US Patent Number 5,861,906 discloses an interactive video-on-demand application for use with a set-top box coupled to a television.

### SUMMARY

According to a first aspect of the present invention there is provided a method of synchronizing video content stored in a digital entertainment server with video content stored in a portable entertainment apparatus, wherein the portable entertainment apparatus has a wish list comprising a selection of video content, and wherein the digital entertainment server has an available-content list, the method comprising:
determining whether the portable entertainment apparatus is within synchronization range from the digital entertainment server;
responsive to determining that the portable entertainment apparatus is within synchronization range:
   establishing a communication link with the digital entertainment server;
   receiving the available-content list from the digital entertainment server;
   comparing the wish list with the available-content list; and
   downloading video content found on both the wish list and the available content list from the digital entertainment server to the portable entertainment apparatus.

According to a second aspect of the invention a portable entertainment apparatus that operates in conjunction with a digital entertainment server storing entertainment content, such as video and audio content, in digital format is provided. The portable entertainment apparatus comprises a communications interface for downloading video content from the digital entertainment server;
a storage module for storing the downloaded video content; and
a controller coupled to and operable to control the operations of the communications interface and the storage module, wherein the controller is operable to:
   determine that the portable entertainment apparatus is within synchronisation range from the digital entertainment server;
   control the communication interface to download from the digital entertainment server video content found on both the wish list and the available content list.

The portable entertainment apparatus, which may be embodied as a handheld device, may download the entertainment content from the digital entertainment server. According to one embodiment, the portable entertainment apparatus may store at least one hour of video content in digital format in a storage device, such as a disk-based storage medium, which is integrated into, integral to or otherwise incorporated into the portable entertainment apparatus. The entertainment content stored in the digital entertainment server and the portable entertainment apparatus may synchronized after the portable entertainment apparatus establishes a communication link with the digital entertainment server.

By way of example, the digital entertainment server may be operable to store video content, and the portable entertainment apparatus may be operable to store at least part of the video content stored in the digital entertainment server. The portable entertainment apparatus may include (i) a communications interface for downloading video content from the digital entertainment server in digital format, (ii) a storage module for storing the downloaded video content; and (iii) a controller coupled to and operable to control the operations of the communications interface and the storage module. The controller is operable to control the communication interface so as to download to the portable entertainment apparatus at least part of the video content stored in the digital entertainment server responsive to the portable entertainment apparatus establishing a communication with the digital entertainment server.

### BRIEF DESCRIPTION OF THE DRAWINGS

Preferred embodiments are described with reference to the following drawings, wherein like reference numerals refer to like elements in the various figures, and wherein:
FIG. 1 is a first block diagram illustrating a digital entertainment system in accordance with an exemplary embodiment;
FIG. 2 is a second block diagram illustrating a digital entertainment server in accordance with an exemplary embodiment;
FIGS. 3A-3D are third-sixth block diagrams each illustrating a personal entertainment apparatus in accordance with an exemplary embodiment;
FIG. 4 is a seventh block diagram illustrating couplings between elements of the personal entertainment apparatuses described in FIGS. 3A-3D.
FIGS. 5A-5D are first-fourth flowcharts each illustrating a flow for synchronizing a digital entertainment server and a personal entertainment apparatus in accordance with an exemplary embodiment;
FIGS. 6A-6B are a eighth and ninth block diagrams illustrating portable entertainment apparatuses in accordance with exemplary embodiments; and
FIG 7 is a tenth block diagram illustrating a portable entertainment apparatus for playing video content in accordance with an exemplary embodiment.

### DETAILED DESCRIPTION

### Exemplary Architecture

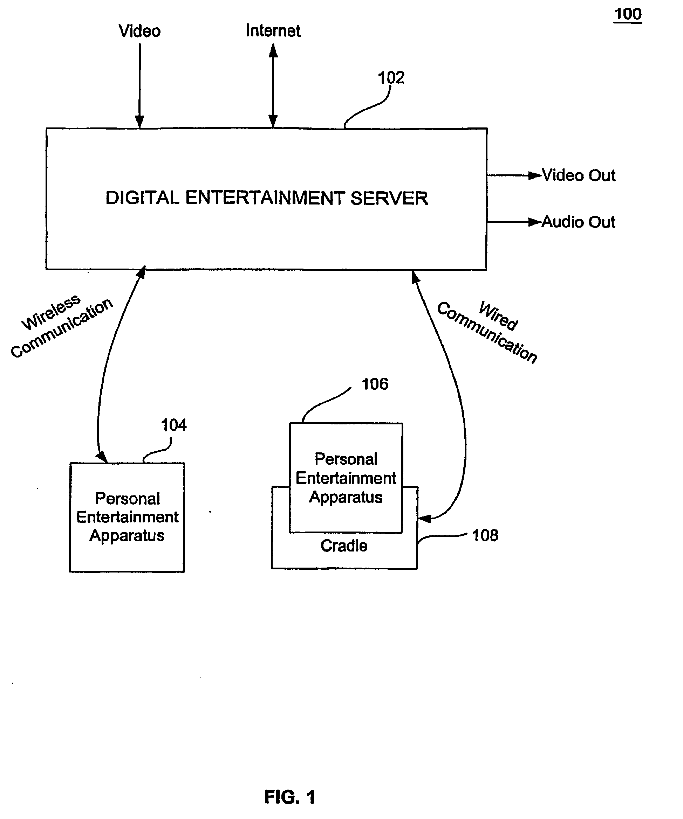

FIG. 1 is a diagram illustrating a digital entertainment system 100 including a digital entertainment server and alternative embodiments of a personal entertainment apparatus in accordance with an exemplary embodiment. Referring to FIG. 1, the digital entertainment system 100 includes a digital entertainment server 102 and one or more personal entertainment apparatuses 104, 106.

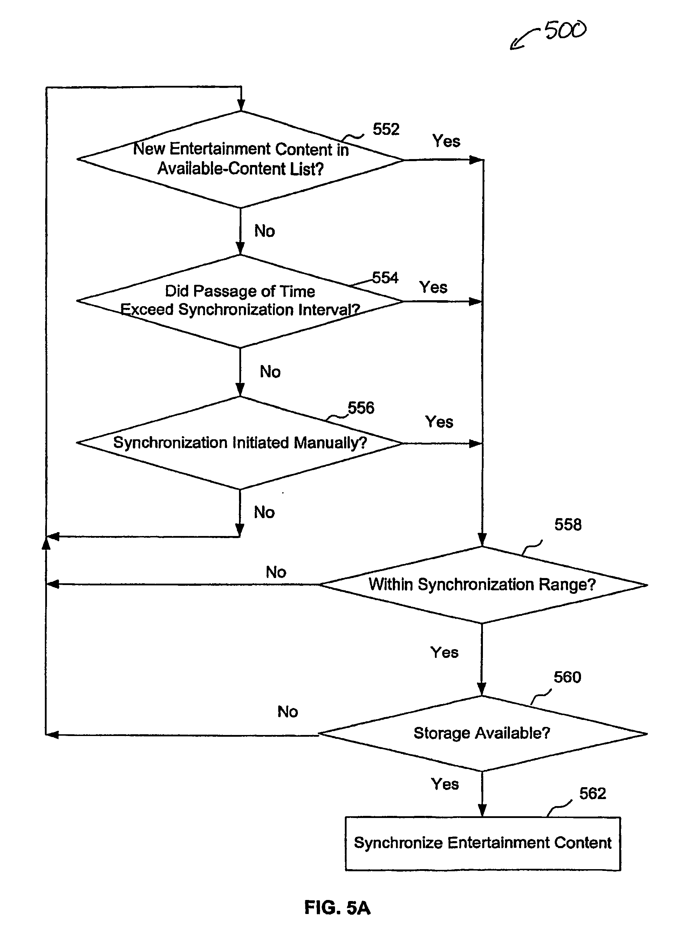

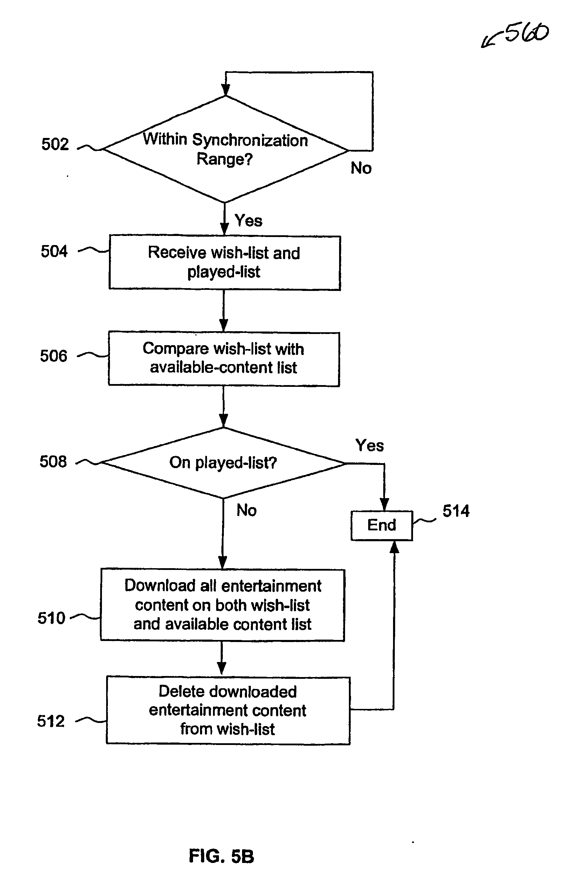

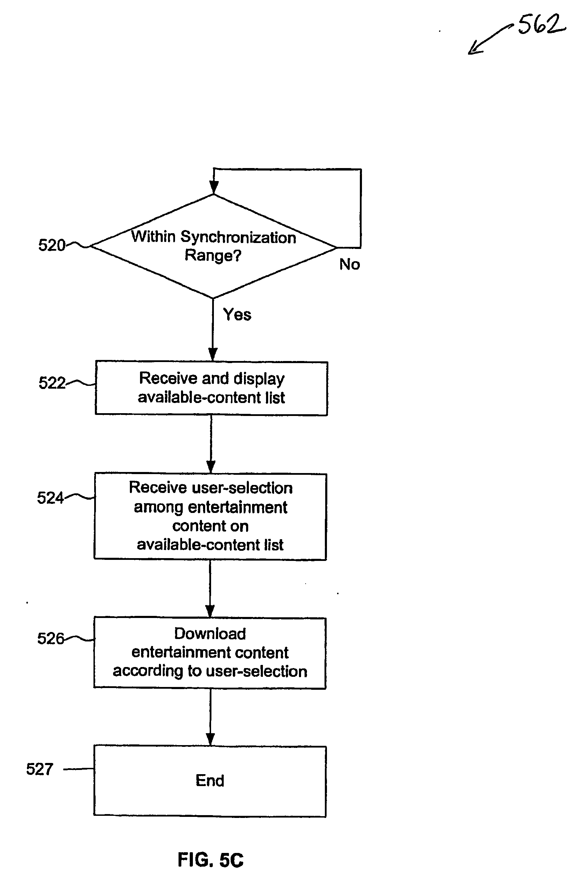

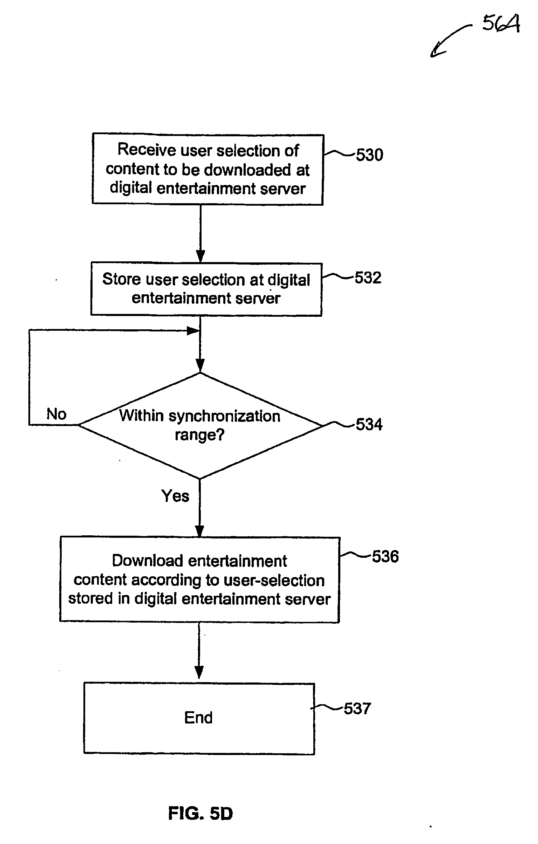

The digital entertainment server 102 may be embodied as a digital video recorder ("DVR"). As such, it may output video and audio to conventional displays and speakers, respectively. The digital entertainment server 102, however, also includes a communication interface for communicating with the personal entertainment apparatuses 104, 106. In addition, the digital entertainment server 102 employs a control mechanism for synchronizing the entertainment content stored therein with the entertainment content stored in the personal entertainment apparatuses 104, 106. Exemplary embodiments as described below with reference to FIGS. 5A, 5B, 5C, and 5D.

The digital entertainment server 102 may receive digital entertainment content, including video content, from various conventional interfaces, including a coaxial Radio Frequency ("RF") Antenna, and S-Video interface, network interfaces, and the like (not shown). In addition, the digital entertainment server 102 may be capable of connecting to a data communications network, such as the Internet, to download entertainment content and upload information to a remote server (not shown).

The personal entertainment apparatuses 104, 106 are portable and/or handheld devices that are adapted to process video and audio content. The personal entertainment apparatuses 104, 106 are client devices in relation to the digital entertainment server 102. In other words, responsive to a request, the digital entertainment server 102 downloads digital entertainment content, such as video content, to the personal entertainment apparatus 104 via a communications interface. This communications interface may be, for example, a wireless interface, such as an RF interface, a Bluetooth interface, a cellular communication interface, and the like.

In another embodiment, the personal entertainment apparatus 106 is placed on a cradle 108 connected to or directly coupled via a cable (not shown) to a wired communication network. In such case, the digital entertainment server 102 downloads digital entertainment content, such as video content to the personal entertainment apparatus 106 via the wired communication network and the cradle 108 or cable (not shown).

The cradle 108 may have a button (not shown) that, when pressed, initiates a sequence for synchronizing the digital entertainment content stored in the digital entertainment server 102 and the personal entertainment apparatus 106. Once stored in the personal entertainment apparatuses 104, 106, the personal entertainment apparatuses 104, 106 is then operable to play the downloaded digital entertainment content.

The personal entertainment apparatuses 104, 106 may be handheld and portable so that they can be (i) carried anywhere with the downloaded video content stored therein and (ii) then capable of playing the downloaded video content anywhere at a location remote from the digital entertainment server 102. Furthermore, the video content stored in the personal entertainment apparatuses 104, 106 is synchronized with the video content stored in the digital entertainment server 102 whenever communicatively coupled to the communications network via the communications interface.

As such, when new entertainment content is stored in the digital entertainment server 102, the personal entertainment apparatuses 104, 106 are operable to detect the presence of the new entertainment content, and responsively download at least part of the new entertainment content. The new entertainment content may be downloaded in accordance with user preferences as described in more detail below.

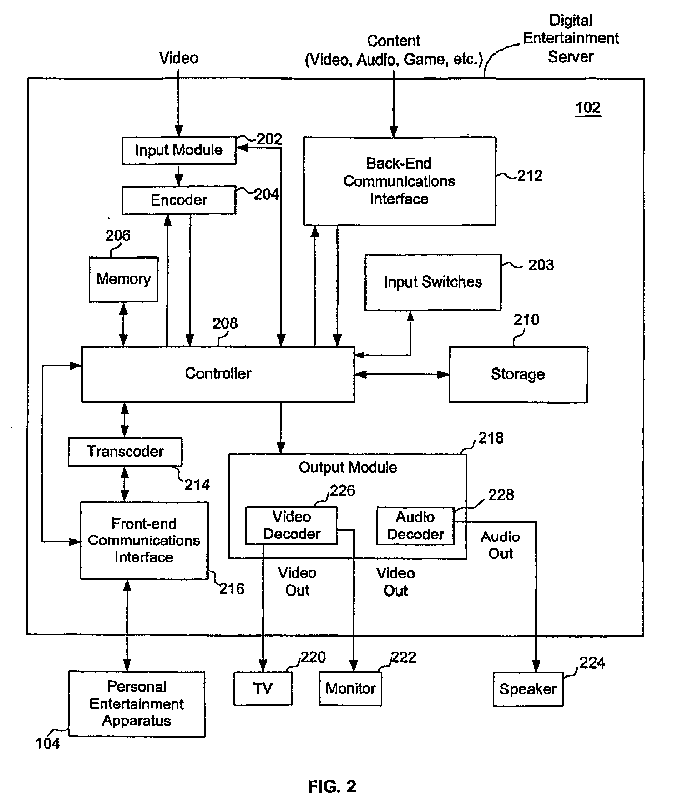

FIG. 2 is a block diagram illustrating the digital entertainment server 102 in accordance with an exemplary embodiment. The digital entertainment server 102 may include an input module 202, input switches 203, an encoder 204, a memory 206, a controller 208, a data storage medium 210, a back-end communications interface 212, a transcoder 214, a front-end communications interface 216, and an output module 218.

For ease of understanding, the digital entertainment server 102 is shown coupled to a TV 220, a monitor 222, a speaker 224, and the personal entertainment apparatus 104. The digital entertainment server 102 may also have a power source (not shown) for providing power to its components. The power source can be a conventional battery, a rechargeable battery, or any other type of power source.

The input module 202 may receive input video content through various conventional interfaces, including coaxial RF antennas, an S-Video interface, and the like. The received video signals may originate from standard NTSC broadcast, high definition television (HDTV) broadcast, standard cable, satellite, home video (e.g., VHS) and/or other sources. The input module 202 may also receive input from other devices, such as a set top box that receives one signal format and outputs an NTSC signal or other video format. The input module 202 is configured to include appropriate tuning functionality as well.

The video content received by the input module 202, which is in the form of video signals, is passed to the encoder 204. The encoder 204 then converts video signals from a first format (e.g., analog NTSC, VHS, S-Video, or other conventional format) to a digital format (e.g., MPEG-2). The digital video data is then stored under control of the controller 208 in the storage medium 210 for future retrieval.

The storage medium 210 may be any type of rewritable memory capable of storing digital data, and is typically a hard disk, an optical disk such as rewritable DVD (DVD-RW) or rewritable DC (CD-RW), flash memory, or the like. Although various capacities of the storage medium 210 may be provided ranging from a few minutes to hundreds of hours, the storage medium 210 may typically store at least one hour of video content in digital format. Roughly, for each gigabyte of storage, about 1 hour of video content may be stored at standard image quality using MPEG-2.

Video content stored in the storage medium 210 may be viewed immediately or at a later time. Additional information such as program guide data, title of the video content, and the like may be stored in association with the stored video content to identify and manage the stored video content in the storage medium 210.

The digital entertainment server 102 may also be connected to a data communication network, such as the Internet, via the back-end communications interface 212. The back-end communications interface 212 may be a standard or proprietary network interface that allows connection to an Ethernet-based network. This back-end communications interface 212 may also be used to connect to a home network, a broadband network, or any other data network.

The digital entertainment server 102 may download various entertainment content such as video, audio, game, and the like in digital format through the back-end communication interface 212 from various content sources on the data communication network. Content received through the back-end communication interface 212 may already in digital format such as MPEG2, and thus, the controller 208 may cause the content to be stored in the storage medium 210 without processing by the encoder 204.

In addition, the digital entertainment server 102 can transmit data to a remote server (not shown) on the data communication network through the back-end communications interface 212. For example, pay-per-view content selection information, request of specific entertainment content, credit card payment information, or any other type of information used by the digital entertainment server 102 may be transmitted via the back-end communication interface 212 to the remote server.

The controller 208 controls the operation of the various elements in the digital entertainment server, including the input module 202, the encoder 204, the memory 206, the back-end communications interface 212, the storage medium 210, the transcoder 214, the front-end communications interface 216, and the output module 218. To facilitate this, the controller may be embodied as, for example, a general purpose computing platform, a specialized computing platform, a Linux or other open source computing platform, a proprietary computing platform, and the like.

Accordingly, the processing system 110 includes at least one processor that is operable to execute general and proprietary logic. To this end, the controller 208 executes instructions or programs stored in the memory 206 to provide various functionalities of the digital entertainment server 102, such as synchronizing the digital entertainment content stored in the digital entertainment server 102 and the personal entertainment apparatus 104.

The memory 106 operates as a working memory for the controller 108 when the controller executes instructions and programs and may store additional instructions, such as boot-up sequences and/or other information. The memory 206 may be just about any type of storage media, including for example, a rewritable memory such as an SRAM and/or read-only memory such as ROMs.

The output module 218 includes a video decoder 226 and an audio decoder 228. The video and the audio decoders 226, 228 may be decoders that convert the digital video and digital audio content stored in the storage medium 210 into a format compatible with conventional display devices, such as an NTSC format television set 220 or a computer monitor 222, and with conventional speakers 224 (e.g., MPEG decoders).

The digital entertainment server 102 also communicates with a personal entertainment apparatus 104 as described in FIG. 1 via the front-end communications interface 216. Using the front-end communications interface 216, the digital entertainment server 102 may transmit entertainment content stored in the storage medium 210 to the personal entertainment apparatus 104. The digital entertainment server 102 may also receive data or other information, such as a wish list of entertainment content, or various control signals from the personal entertainment apparatus 104. The front-end communications interface 216 may be a wireless communication interface, such as cellular modem, a Bluetooth interface, satellite communication interface or RF communication interface, and the like.

Alternatively, the entertainment content can be downloaded to a personal entertainment apparatus 106 with wired communication capabilities as described above. In such case, the front-end communications interface 216 may be a wired communication interface, such as a modem that can be connected to a regular telephone line, an RS-232C interface, a standard USB port, and IEEE 1394 connection (otherwise known as FireWire, I.Link, or Lynx) and the like. In addition, the digital entertainment server 102 may be connected to a personal entertainment apparatus 106 with wired communication capabilities, rather than a personal entertainment apparatus 104 with wireless communication capabilities.

The entertainment content stored in the storage medium 210 may be downloaded to the personal entertainment apparatus 104 in digital format without decoding. This may prevent any distortion of the entertainment content.

The transcoder 214 is capable of modifying the encoding rate of the digital entertainment content under control of the controller 208. This may be done prior to downloading to the personal entertainment apparatus 104, and by sampling the digital entertainment content at a predetermined sampling rate. The predetermined sampling rate may be selected by a user of the digital entertainment server 102 or the personal entertainment apparatus 104. In one embodiment, the encoding rate is selected by the user of the digital entertainment server 102 by using the input keys 203.

The encoding rate may be selected by the user of the personal entertainment server 104 by using input switches (not shown), and the selected encoding rate may be communicated to the controller 208 via the front-end communications interface 216. The controller 208 may also control the transcoder 214 according to the selected encoding rate. In this manner, users can choose to compromise the quality of the downloaded entertainment content in exchange for reduced data size, and thus, increase an amount of downloadable entertainment content.

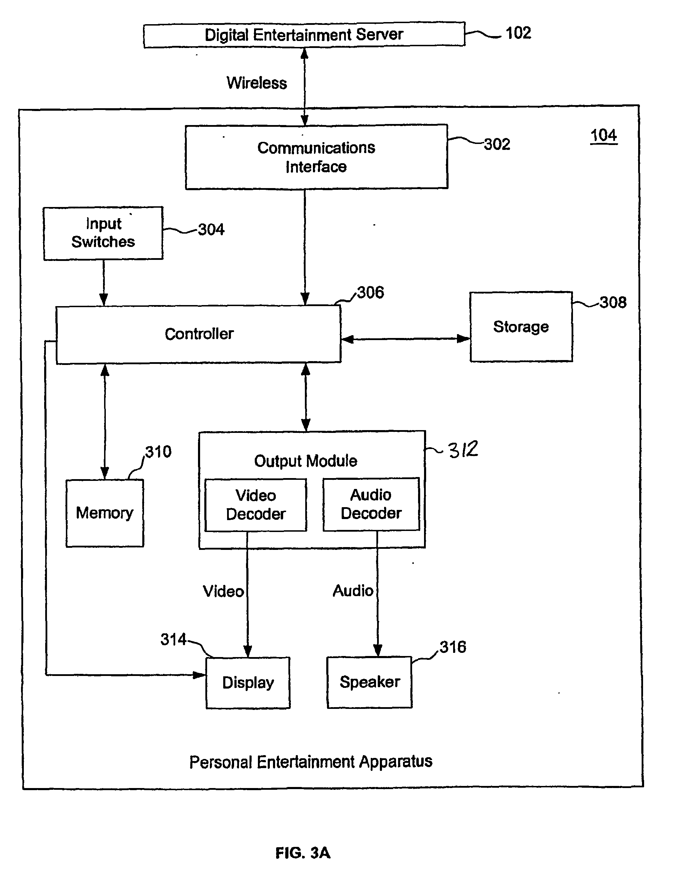

Referring now to FIG. 3A, a block diagram illustrating a personal entertainment apparatus according to one embodiment is shown. The personal entertainment apparatus 104 may operate in conjunction with the digital entertainment server 102 as described above and illustrated in FIG. 2.

The personal entertainment apparatus 104 includes a communications interface 302, input switches 304, a controller 306, a storage medium 308, a memory 310, an output module 312, a display 314, and a speaker 316. The personal entertainment apparatus 104 may also have a power source (not shown) for providing power to its components. The power source can be a conventional battery, a rechargeable battery, or any other type of power source.

The personal entertainment apparatus 104 may allow a user to beneficially enjoy the entertainment content stored therein at a location remote from the digital entertainment server 102, e.g., in a hotel room or in a car, with proper connection to the display device 314 and/or the speaker 316. Alternatively, the personal entertainment apparatus 104 can operate without the need for connection to any external display device or speaker, when the display 314 and speaker 316 are integrated into, integral to or otherwise incorporated in the personal entertainment apparatus 104.

In this embodiment, the personal entertainment apparatus 104 may be operable to download entertainment content from the digital entertainment server 102 via the communications interface 302 using wireless communications. As such, the communications interface 302 may be a wireless communication interface, such as cellular modem, a Bluetooth interface, satellite communication interface, an RF communication interface, and the like.

The downloaded video and audio content is in digital form, and may be stored in the storage medium 308 for immediate or future retrieval. The storage medium 308 by be any type of rewritable memory capable of storing digital data, such as a flash memory, a hard disk, an optical disk such as rewritable DVD (DVD-RW) or rewritable DC (DC-RW), or any other rewritable data storage means. Although various capacities of the storage medium 308 may be provided ranging from a few minutes to hundreds of hours, the storage medium 308 may typically store at least one hour of video content in digital format. Additional information such as program guide data, title of the video content, and the like may be stored in the storage medium 308 in association with the stored video content to manage and identify the stored video content.

In addition, the personal entertainment apparatus 104 can also transmit data to the digital entertainment server 102 via the communication interface 302. For example, it is possible to transmit a wish list of entertainment content, a user-selected encoding rate, a user-selected interval for synchronization of content between the digital entertainment server 102 and the personal entertainment apparatus 104, or any other type of data, from the personal entertainment apparatus 104 to the digital entertainment server 102.

The input switches 304 provide a way for a user to control the personal entertainment apparatus 104. The input switches 304 include, but are not limited to, a play button, a stop button, a menu button, and enter (select) button, a forward button, a rewind button, a power on/off button, a standby mode button, and the like. The input switches 304 may also include a button to input the encoding rate selected by the user for the transcoder 214 in the digital entertainment server 102. The input commands generated by the input switches 304 are provided to the controller 306 so that the controller 306 controls the operation of the personal entertainment apparatus 104 in response to the input commands. Some of the input commands may also be transmitted to the digital entertainment server 102 via the communications interface 302.

The controller 306 receives the various input commands from the input switches 304 and also executes instructions or programs stored in the memory 310 to control the various elements in the personal entertainment apparatus 104, including the communications interface 302, the input switches 204, the storage medium 308, the memory 310, the output module 32, the display 314, and the speaker 316. The memory 310 operates as a working memory for the controller 306 when the controller executes instructions and programs and may also store additional instructions, such as boot-up sequences and/or other information. The memory 310 may be embodied as a rewritable memory, such as an SRAM, but can also include read-only memory.

The output module 312 includes a video decoder 318 and an audio decoder 320. The video decoder 318 and the audio decoder 320 are decoders that convert the digital video and digital audio content stored in the storage medium 308, and encode, in a digital format, into a format compatible with a conventional display device 314 and with a conventional speaker 316 (e.g., an MPEG decoder). The display device 314 can be a liquid crystal display (LCD), a computer monitor, a conventional television set and/or any other display device.

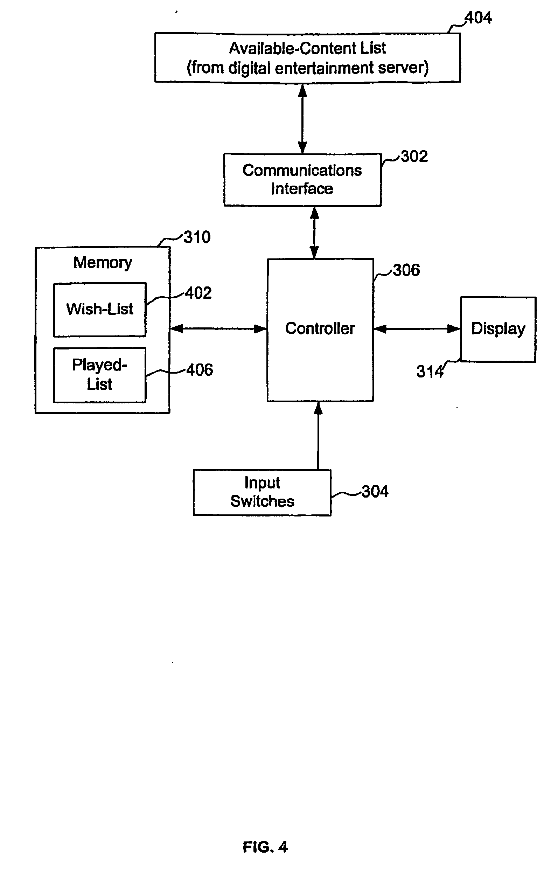

The entertainment content stored in the digital entertainment server 102 may be synchronized in various ways with the entertainment content stored in the personal entertainment apparatus 104. As such, the personal entertainment apparatus 104 is operable to download at least part of the entertainment content from the digital entertainment server 102 after it is within synchronization range for communicating with the digital entertainment server 102. The method of synchronizing the stored entertainment content is describe in more detail below with reference to FIGS. 4, 5A, 5B, 5C, and 5D.

The entertainment content stored in the storage medium 308 may be deleted when the user has previously viewed and/or listened to the entertainment content, although other embodiments may still store the entertainment content even after the user has used the entertainment content. For example, the entertainment content may be deleted from the storage medium 308 after a predetermined time, e.g., 10 minutes, 1 hour, or 10 hours, after the entertainment content has been used. Alternatively, the entertainment content may be deleted from the storage medium when the entertainment content is used a predetermined number of instances, e.g., once, twice, or the like.

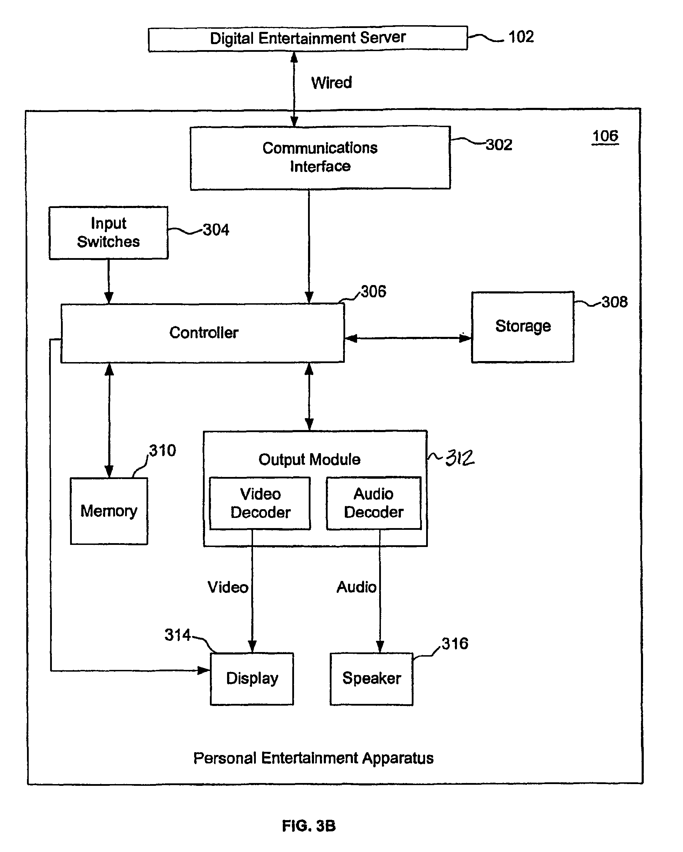

FIG. 3B is a block diagram illustrating a personal entertainment apparatus 106 according to another exemplary embodiment. The personal entertainment apparatus 106 is similar to the personal entertainment apparatus 104 shown in FIG. 3A in most aspects, except that the personal entertainment apparatus 106 in FIG. 3B has wired communication capabilities. Accordingly, the communications interface 302 may be embodied as a wired communication interface such as a standard modem that can be connected to a telephone line, a RS-232C interface, a standard USB port, an IEEE 1394 connection (otherwise known as FireWire, i.Link, or Lynx) and the like.

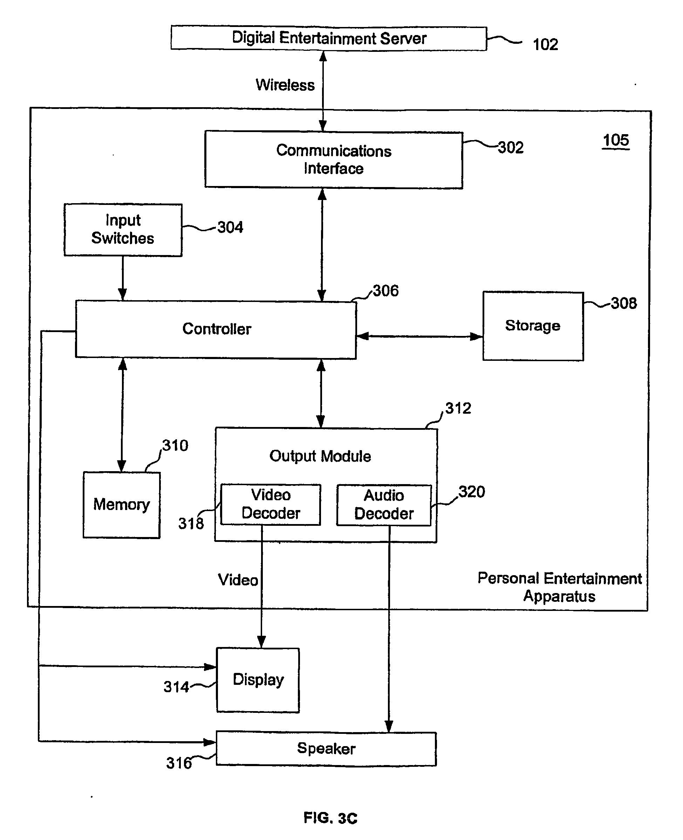

FIG 3C is another block diagram illustrating a personal entertainment apparatus 105 in accordance with another exemplary embodiment. In this embodiment, the personal entertainment apparatus 105 is similar to the personal entertainment apparatus 104 shown in FIG. 3A in most aspects, except that the personal entertainment apparatus 104 in FIG. 3C does not include an integrated display device and/or speaker, but rather, the display device 314 and speaker 316 are external to the personal entertainment apparatus 105.

In this case, the video and audio decoders 318, 320 output video and audio content, respectively, in a format compatible with display 314 and speakers 316, respectively. As such, the personal entertainment apparatus 104 may be compatible with any type of conventional display or speaker, including, for example, a car video display or car audio speaker.

When embodied as a portable device, the users of the personal entertainment apparatus 105 can enjoy video or audio content at any location remote from the digital entertainment server 102. For example, a user can (i) download movies from the digital entertainment server 102 to the personal entertainment apparatus 105, (ii) take it to any location, and (iii) then enjoy the movies stored in the personal entertainment apparatus 105 by connecting it to an external device having a display and speaker.

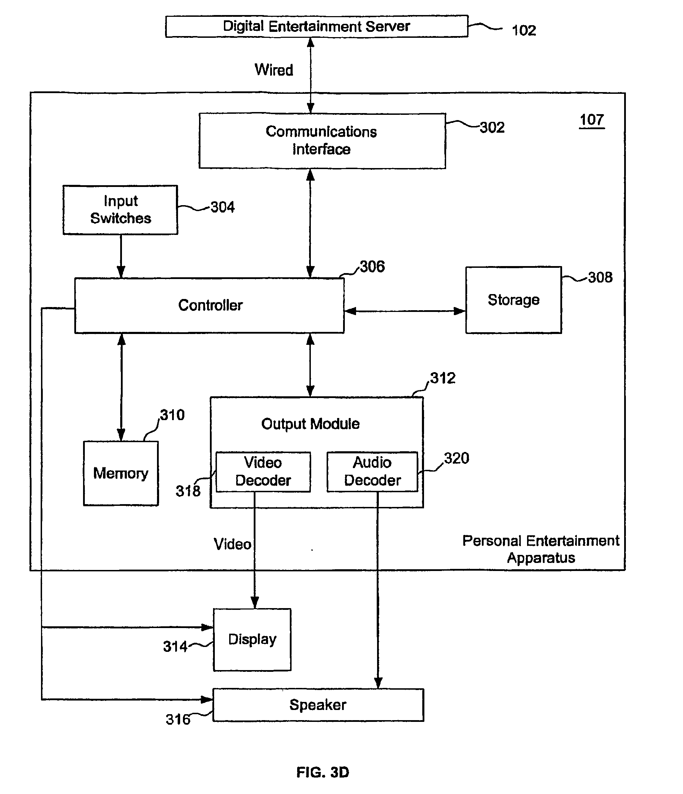

FIG. 3D is a block diagram illustrating a personal entertainment apparatus 107 in accordance with another exemplary embodiment. As shown in FIG. 3D, the personal entertainment apparatus 107 is similar to the personal entertainment apparatus 106 shown in FIG. 3B, except that the personal entertainment apparatus 107 in FIG. 3D does not include does not include an integrated display device and/or speaker, but rather, the display device 314 and speaker 316 are external to the personal entertainment apparatus 105.

In this case, the video and audio decoders 318, 320 output video and audio content, respectively, in a format compatible with display 314 and speakers 316, respectively. As such, the personal entertainment apparatus 104 may be compatible with any type of conventional display or speaker, including, for example, a car video display or car audio speaker.

FIG. 4 is a block diagram of a coupling between elements of the personal entertainment apparatuses 104-107 described in FIGS. 3A-3D. The elements of the personal entertainment apparatuses shown in FIG. 4 include the communications interface 302, the controller 306, the memory 310, the display 314, and the input switches 304. For simplicity, the personal entertainment apparatuses 104-107 are referred to collectively as personal entertainment apparatus 104 in reference to FIG. 4.

Referring now to FIG. 4, the memory 310 may store a wish list 402 and a played list 406 of entertainment content. The wish list 402 is typically a list of entertainment content that the user of the personal entertainment apparatus 104 wishes to download from the digital entertainment server 102 after the entertainment content becomes available at the digital entertainment server 102. For example, the wish list 402 can store title a list of movies that the user is interested in. Alternatively, the wish list 402 can store a list of music, game content or any other type of entertainment content that the user wishes to download from the digital entertainment server 102.

The played list 406 typically stores a list of entertainment content that has already been used by the user of the portable entertainment apparatus 104. In addition, the played list 406 and the wish list 402 are typically mutually exclusive, i.e., the entertainment content on the played list 406 is not listed on the wish list 402. This may be accomplished by the controller 306 executing software preventing entertainment content listed on the played list 406 from being added to the wish list 402.

According to another embodiment, the played list 406 and the wish list 402 can overlap. That is, entertainment content on the played list 406 can also be on the wish list 402.

The memory 206 of the digital entertainment server 102 may also maintain an available-content list 404. This available-content list 404 may be a list of entertainment content that is stored in the storage medium 210 of the digital entertainment server 102. This content may be indexed by its title, type or any other identifying information. The available entertainment content may include video (movies), audio (music), game content, and the like.

The digital entertainment server 102 and the personal entertainment apparatus 104 may synchronize their stored entertainment content using the available-content list 404, the wish list 402, and the played list 406. The available-content list 404 may be transmitted from the digital entertainment server 102 to the personal entertainment apparatus 104 via the communication interface 302 at the request of the controller 306, for instance. Alternatively, the available-content list 404 may be transmitted automatically at a predetermined interval to the personal entertainment apparatus 102. The received available-content list 404 may also be stored in the memory 310 temporarily for use by the personal entertainment apparatus 104 for synchronization of entertainment content.

As an alternative, the entertainment content on both the available-content list 404 and the wish list 402 may be given a priority for downloading to the personal entertainment apparatus 104. In addition, the entertainment content on both the available-content list 404 and the wish list 402 may be downloaded. The controller 306, however, may be configured to prevent entertainment content on the played list 406 from being downloaded to the personal entertainment apparatus 104.

In addition, the user of the personal entertainment apparatus 102 can choose entertainment content that he or she would like to download from the digital entertainment server 102 after looking at the available-content list 404. To facilitate this, the controller 306 may display the available-content list 404 received from the digital entertainment server 102 on the display 314 by executing graphical user interface (not shown) stored in the memory 310. Using the display 314 as a reference, the user can select entertainment content that he or she wants to download from the available-content list 404 by using the input switches 304.

### Exemplary Operation

FIG. 5A is a flowchart illustrating a flow 500 for synchronizing a digital entertainment server and a personal entertainment apparatus in accordance with an exemplary embodiment. Flow 500 includes a number of functions for determining whether or not a synchronization of entertainment content between the digital entertainment server 102 and a personal entertainment apparatus, such personal entertainment apparatus 104, should be performed. The functions of the flow 500 may be performed by the digital entertainment server 102 or the personal entertainment apparatus 104.

Referring now to the Flow 500 at decision block 522, a first test is performed to determine if new entertainment content is available in the available-content list 404. If no new entertainment content is available, a second test is performed to determine whether the passage of time since the most recent synchronization exceeded a synchronization interval, as shown in decision block 554. The synchronization interval can be predetermined or be set by a user. If the passage of time did not exceed the synchronization interval, then a test is performed to determine, as shown in decision block 556, whether a synchronization was initiated manually by a user. If not, the process returns to step 552 to determine whether synchronization is necessary.

On the other hand, a "yes" result from any of the decision blocks 552, 554, and 556, cause the Flow 500 to transition to decision block 558. At decision block 558, a test is performed to determine whether the personal entertainment apparatus is within synchronization range for communicating with the digital entertainment server 102. If not, then the process returns to step 552. If storage is available, then entertainment content may synchronized between the digital entertainment server 102 and the personal entertainment apparatus 104 in according to a synchronization method as described below, or any other synchronization method.

FIG. 5B is a flowchart illustrating a Flow 560 for synchronizing a digital entertainment server and a personal entertainment apparatus in accordance with an exemplary embodiment. Flow 560 includes a number of functions for determining whether or not a synchronization of entertainment content between the digital entertainment server 102 and a personal entertainment apparatus, such personal entertainment apparatus 104, should be performed. The functions of the flow 560 may be performed by the digital entertainment server 102 or the personal entertainment apparatus 104.

In this embodiment, the entertainment content may be automatically synchronized according to the wish list 402 and the available-content list 404 when the personal entertainment apparatus 104 is within synchronization range for communicating with digital entertainment server 102. Entertainment content that has already been played is not to be downloaded to the personal entertainment apparatus 104. Flow 560 is described in reference to the architecture illustrated in FIG. 4.

At decision block 502, the personal entertainment apparatus 104 performs a test to determine whether or not it is within synchronization range for communicating with the digital entertainment server 102. If the personal entertainment apparatus 104 is within synchronization range of the digital entertainment server 102, then a wireless or wired communication link can be established between the digital entertainment server 102 and the personal entertainment apparatus 104 via the communication interface 302. The process of determining whether or not a wired or wireless communication link has been established is well-known in the art.

The personal entertainment apparatus 104 may continually or periodically monitor the communication link to determine if it is not within synchronization range. For example, the personal entertainment apparatus 104 may check the communication link at a predetermined interval, e.g., ever 10 minutes, every hour, or every 24 hours.

When the personal entertainment apparatus 104 is within synchronization range, then the digital entertainment server 102 receives the wish list 402 and the played list 406 from the personal entertainment apparatus 104, as shown in block 504. The received wish list 404 and the played list 406 may be temporarily stored in the memory 206 of the digital entertainment server 102. Then, the wish list 402 may be compared 506 with the available-content list 404 to identify entertainment content available on both lists.

As shown in decision block 508, the digital entertainment server 102 may also check whether or not the identified entertainment content on both the wish list 402 and the available-content list 404 is on the played list 406 as well. This function may be optional and may be removed from the process, if desired. If the identified entertainment content on both the wish list 402 and the available-content list 404 is also on the played list 406, then the Flow 560 ends, as shown in block 514.

If, on the other hand, the identified entertainment content on both the wish list 402 and the available-content list 404 is not on the played-list, then all the identified entertainment content may be downloaded 510 to the personal entertainment apparatus 104, as shown in block 510. At block 512, the downloaded entertainment content may be deleted from the wish list 402. The flow then ends as shown in block 514.

Referring now to FIG. 5C, a flowchart illustrating a Flow 562 for synchronizing a digital entertainment server and a personal entertainment apparatus in accordance with an exemplary embodiment is shown. Flow 562 includes a number of functions for determining whether or not a synchronization of entertainment content between the digital entertainment server 102 and a personal entertainment apparatus, such personal entertainment apparatus 104, should be performed. The functions of the flow 562 may be performed by the digital entertainment server 102 or may be performed by the personal entertainment apparatus 104.

In this embodiment, the entertainment content is synchronized automatically when the personal entertainment apparatus is within synchronization range from the digital entertainment server 102 according to a user selection at the personal entertainment apparatus 104 of the entertainment content on the available-content list 404. Flow 562 is described in reference to the architecture illustrated in FIG. 4.

Referring to decision block 520, the personal entertainment apparatus 104 performs a test to determine whether or not it is within synchronization range of the digital entertainment server 102, as described above in reference to FIG. 5B. When the personal entertainment apparatus 104 is within synchronization range for communicating with the digital entertainment server 102, it then receives the available-content list 404. The available-content list 404 may be temporarily stored in the memory 310 and displayed on the display 314, as shown in block 522. Then, the personal entertainment apparatus 104 may receive a user-selection of entertainment content from available-content list 404 using the input switches 304, as shown in block 524. The entertainment content may be downloaded to the personal entertainment apparatus 104 from digital entertainment server 102 according to the user selection, as shown in block 526. At block 527, the Flow 562 ends.

FIG. 5D is a flowchart illustrating a Flow 564 for synchronizing a digital entertainment server and a personal entertainment apparatus in accordance with an exemplary embodiment is shown. Flow 564 includes a number of functions for determining whether or not a synchronization of entertainment content between the digital entertainment server 102 and a personal entertainment apparatus, such personal entertainment apparatus 104, should be performed. The functions of the flow 564 may be performed by the digital entertainment server 102 or the personal entertainment apparatus 104.

In this embodiment, the entertainment content is synchronized automatically when the personal entertainment apparatus is within synchronization range for communicating with the digital entertainment server 102 in according with a user selection at the digital entertainment server 102. Referring now to block 530, the digital entertainment server 102 may receive a user selection of entertainment content to be downloaded to the personal entertainment apparatus 104. The user selection may be stored in the memory 206 of the digital entertainment server 102, as shown in block 532. Sometime thereafter, the personal entertainment apparatus 104 performs a test to determine whether or not it is within synchronization range for communicating with the digital entertainment server 102, as described above with reference to FIG. 5A and shown in decision block 534.

When the personal entertainment apparatus 104 is within synchronization range, then entertainment content is downloaded from the digital entertainment server 102 to the personal entertainment apparatus 104 according to the user selection stored in the digital entertainment server 102, as shown in block 536. At block 537, the Flow 564 ends.

### Alternative Architecture

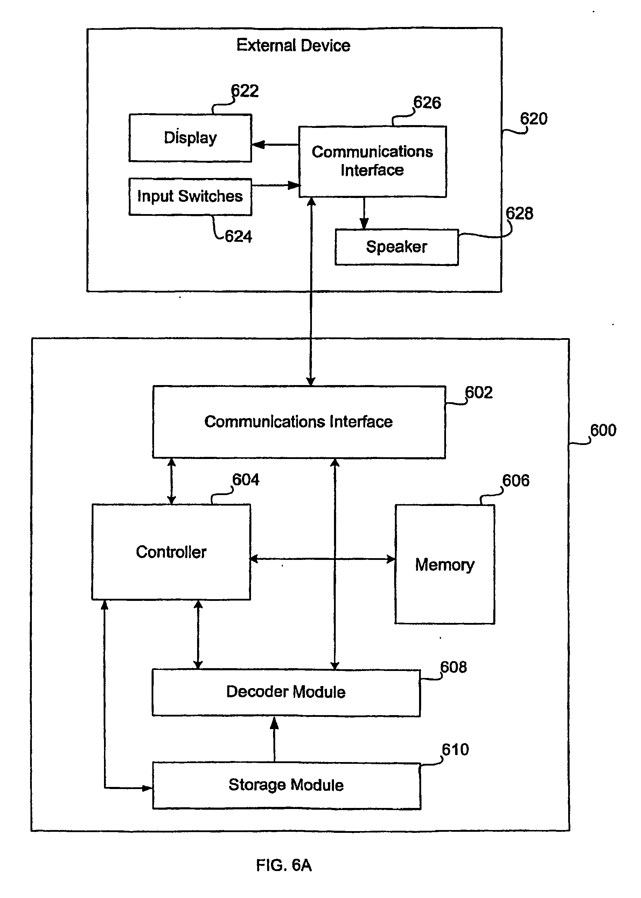

FIG. 6A is a block diagram illustrating a portable entertainment apparatus 600 in accordance with an exemplary embodiment. The portable entertainment apparatus 600 may operate in conjunction with an external device 620 to (i) receive input commands from a user, (ii) display video content, and (iii) play audio content. The external device 620 can be any type of device that provides input switches 624, a display 622, a speaker 628, and a communication interface 626. For example, a conventional car video system that has input switches, a liquid crystal display, and a speaker will suffice as the external device 620 when it is configured to operate in conjunction with the portable entertainment apparatus 600.

The portable entertainment apparatus 600 may include a communication interface 602, a controller 604, a memory 606, a decoder module 608, and a storage module 610. The portable entertainment apparatus 600 may also have a power source (not shown) for providing power to its components. The power source can be a conventional battery, a rechargeable battery, or any other type of power source. The portable entertainment apparatus 600 shown in FIG. 6A is similar to the personal entertainment apparatus 104 of FIGS. 3A and 3B.

Referring now to Fig. 6A, the storage module 610 is operable to store video content and associated audio content. The storage module 610 may be any type of rewritable memory capable of storing digital data. For example, the storage module 610 may be a flash memory, a hard disk, or an optical disk such as rewritable DVD (DVD-RW) or rewritable CD (CD-RW), or any other rewritable data storage means. Although various capacities of the storage medium 610 may be provided ranging from a few minutes to hundreds of hours, the storage medium 610 typically stores at least one hour of video content in digital format. Additional information such as program guide data, title of the video content, and the like may be stored in the storage medium 610 in association with the stored video content to manage and identify the stored video content. The video content stored in the storage module 610 may be downloaded from a digital entertainment server (not shown).

The decoder module 608 decodes the video and associated audio data stored in the storage module 610 from a digital format, such as MPEG-2, to an analog format that is compatible with the conventional display 622 and the conventional speaker 628 of the external device 620. The decoded video and audio content is provided to the external device via the communication interfaces 602, 626. The communication interfaces 602, 626 may be deployed as any type of conventional video and audio communication interfaces, such as component video, composite video, S-video, conventional audio cables, and the like.

The input switches 624 on the external device 628 provide an interface to the user to control the portable entertainment apparatus 600. The input switches 304 include, but are not limited to, a play button, a stop button, a menu button, an enter (select) button, a forward button, a rewind button, a power on/off button, a standby mode button, and the like. The input control signals generated by the input switches are provided to the controller 604 via the communication interfaces 602, 626 to control the operation of the portable entertainment apparatus 600.

The controller 604 may receive various input control signals from the input switches 624 of the external device 620. Responsively, the controller 604 may execute instructions or programs stored in the memory 606 so as to control the various elements in the portable entertainment apparatus 600, including the communications interface 602, the storage module 610, the memory 606, and the decoder module 608.

The memory 606 may operate as a working memory for the controller 604 when the controller executes instructions and programs, and may also store additional instructions, such as boot-up sequences or other information. The memory 606 is typically a rewritable memory such as an SRAM, but can also include read-only memory such as ROMs.

Since the portable entertainment apparatus 600 receives input commands from the external device 620 and provides decoded video and audio content stored therein to the external device 620, the portable entertainment apparatus 600 can be readily integrated to an external conventional video/audio device such as a car video/audio system typically having input switches, a liquid crystal display, and a speaker.

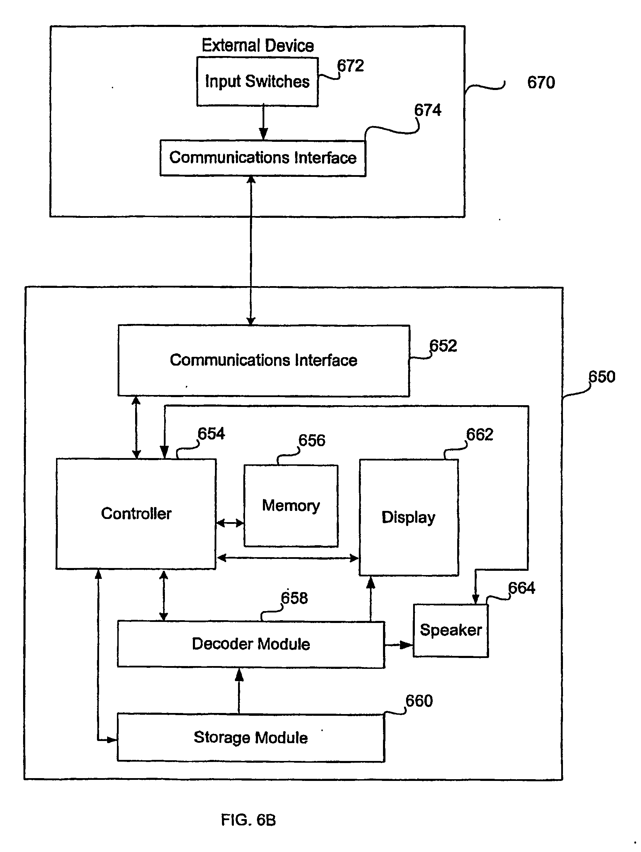

FIG. 6B is a block diagram illustrating a portable entertainment apparatus 650 and an external device 670 in accordance with another exemplary embodiment. The portable entertainment apparatus 650 includes a communications interface 652, a controller 654, a memory 656, a decoder module 658, a storage module 660, a display 662, and a speaker 664. The external device 670 includes input switches 672 and a communications interface 674.

The portable entertainment apparatus 650 also has a power source (not shown) for providing power to its components. The power source can be a convention battery, a rechargeable battery, or any other type of power source. The portable entertainment apparatus 650 may operate in conjunction with the external device 670 to receive input commands from a user by using the input switches. Each of the elements of the portable entertainment apparatus 650 and an external device 670 are similar to the previously described embodiments, and therefore, are not included here for the sake of simplicity.

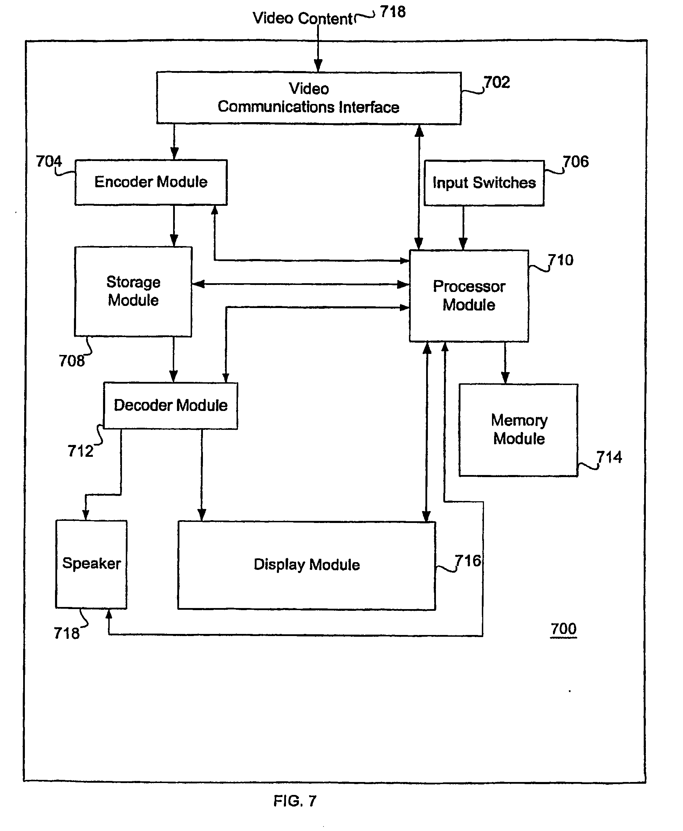

FIG. 7 is a block diagram illustrating a portable entertainment apparatus 700 for playing video content in accordance with yet another exemplary embodiment. The portable entertainment apparatus 700 includes a dedicated video communications interface 702 used only for video communication, an encoder module 704, input switches 706, a storage module 708, a processor module 710, a decoder module 712, a memory module 714, a speaker 718, and a display module 716. The portable entertainment apparatus 700 also has a housing (not shown) enclosing these elements, except that the input switches 706, the display module 716, and the speaker 718 are located on the exterior surface of the housing. The elements of the portable entertainment apparatus 700 may be integrated into, integral to or otherwise incorporated within the single housing of the portable entertainment apparatus 700 (not shown).

The dedicated video communications interface 702 is a communications interface dedicated to receiving video content 718 and other data associated with the video content (such as title, caption data, etc.) from any source (not shown) of video content. The video communication interface 702 can be any type of wired or wireless communication interface as long as it is dedicated to reception of video content, and data associated with the video content. For example, the video communication interface 702 can be an RF coaxial cable, S-video interface, component video interface, composite video interface, a standard modem connection to a regular telephone line, RS-232C interface, a standard USB connection, a IEEE 1394 connection (otherwise known as FireWire, i.Link, or Lynx), a cellular communication interface, Bluetooth interface, satellite communication interface, RF communication interface, or the like.

The encoder module 704 encodes the received video content 718 to a digital format such as MPEG. If the received video content 704 is already in digital format, then the encoder module 704 might not encode the video content again.

The encoded video content is stored in the storage module 708 in digital format. The storage module 708 may be any type of rewritable memory capable of storing digital data such as flash memory, hard disk, rewritable DVD (DVD-RW), rewritable CD (CD-RW), or any other rewritable data storage means.

The decoder module 712 includes both a video decoder and an audio decoder, and may carry out decoding of the encoded video content and associated audio content to a format compatible with conventional display devices, such as a liquid crystal display and/or conventional speakers.

The display module 716 is operable to display the decoded video content and may be any type of conventional display device, which may be, for example, a liquid crystal display, a plasma display panel, and the like. The speaker 718 may be a conventional speaker that is operable to reproduce the decoded audio content.

The input switches 710, which may be located on the exterior surface of the housing (not shown), may be used for inputting commands to the portable entertainment apparatus 700. The input switches 706 may include basic buttons for playing the video content, like a play button for playing video content, a stop button for stopping playing video content, and a menu button for displaying a list of video content stored in the storage module 708. The input switches 706 may also include other switches corresponding to various functions for controlling the portable entertainment apparatus 700. For example, the input switches 706 may include a navigation button for moving through the list of video content, and a select button for selecting one of the video content from the list. The function of the navigation button and the select button can also be provided by the basic buttons such as the menu button and the play button by providing an alternative operational state to the those basic buttons.

The processor module 710 may receive input commands from the input switches 706, and also control the video communications interface 702, the encoder module 704, the storage module 708, the decoder module 712, the display module 716, the speaker 718, and the memory module 714 according to the received input commands. The memory module 714 typically operates as a working memory for the processor module 710 when the processor module 710 executes instructions and programs. The memory module 714 may also store additional instructions, such as boot-up sequences and/or other information. The memory module 714 is typically a rewritable memory such as an SRAM, but can also include read-only memory such as ROMs. In addition, the memory module 714 may maintain graphical user interface software for controlling the operation of the potable entertainment apparatus 700. When executed by the processor module 710, the graphical user interface software is operable to display on the display module 716 in response to activation of the menu button of the input switches 706 a list of video content stored in the storage module 708.

The processor module 710 may cause the decoder module 712 to decode at least part of the video content stored in the storage module 708 and cause the display module 716 to display the decoded video content in response to activation of the play button. The processor module 710 may also cause the display module to stop displaying the decoded video content in response to activation of the stop button.

The portable entertainment apparatus 700 preferably operates with a rechargeable battery power source (not shown), but can also be used with other conventional power sources. The rechargeable battery is a conventional Lithium Ion or NiMH rechargeable battery.

### Conclusion

In the foregoing detailed description, numerous specific details are set forth in order to provide a thorough understanding of exemplary embodiments described herein. However, it will be understood that these embodiments may be practiced without the specific details. In other instances, well-known methods, procedures, components, and structural entities have not been described in detail, so as not to obscure the foregoing description.

In view of the wide variety of embodiments to which the principles of the present invention can be applied, it should be understood that the illustrated embodiments are exemplary only, and should not be taken as limiting the scope of the present invention. In the embodiments described above, the nodes, terminal, devices, and systems may include computing systems, controllers, and other devices containing processors. These devices may contain at least one Central Processing Unit ("CPU") and a memory. In accordance with the practices of persons skilled in the art of computer programming, reference to acts and symbolic representations of operations or instructions may be performed by the various CPUs and memories. Such acts and operations or instructions may be referred to as being "executed," "computer executed" or "CPU executed."

One of ordinary skill in the art will appreciate that the acts and symbolically represented operations or instructions include the manipulation of electrical signals by the CPU. An electrical system represents data bits that can cause a resulting transformation or reduction of the electrical signals and the maintenance of data bits at memory locations in a memory system to thereby reconfigured or otherwise alter the CPU's operation, as well as other processing of signals. The memory locations where data bits are maintained are physical locations that have particular electrical, magnetic, optical, or organic properties corresponding to or representative of the data bits. It should be understood that the exemplary embodiments are not limited to the above-mentioned platforms or CPUs and that other platforms and CPUs may support the described methods.

The data bits may also be maintained on a computer readable medium including magnetic disks, optical disks, and any other volatile (e.g., Random Access Memory ("RAM")) or non-volatile (e.g., Read-Only Memory ("ROM")) mass storage system readable by the CPU. The computer readable medium may include cooperating or interconnected computer readable medium, which exist exclusively on the processing system or are distributed among multiple interconnected processing systems that may be local or remote to the processing system.

Furthermore, the method steps described herein may be taken in sequences other than those described, and more or fewer elements may be used in the block diagrams. The embodiments disclosed are for exemplary purposes only and other embodiments may be employed in lieu of or in combination with of the embodiments disclosed. Further, the claims should not be read as limited to the described order or elements unless stated to that effect. Therefore, all embodiments that come within the scope of the following claims are claimed as the invention.

## Claims

1. A method of synchronizing video content stored in a digital entertainment server (102) with video content stored in a portable entertainment apparatus (104, 106), wherein the portable entertainment apparatus (104,106) has a wish list (402) comprising a selection of video content, and wherein the digital entertainment server (102) has an available-content list (404), the method comprising:
determining (502) whether the portable entertainment apparatus (104, 106) is within synchronization range from the digital entertainment server (102);
responsive to determining that the portable entertainment apparatus (104,106) is within synchronization range:
establishing a communication link with the digital entertainment server (102);
receiving (504) the available-content list (404) from the digital entertainment server (102);
comparing (506) the wish list (402) with the available-content list (404); and
downloading (510) video content found on both the wish list (402) and the available content list (404) from the digital entertainment server (102) to the portable entertainment apparatus (104,106).

2. The method of claim 1, wherein the portable entertainment apparatus (104,106) communicates with the digital entertainment server (102) via a wireless communication interface (302) and the synchronization range is a wireless communication range for communicating with the digital entertainment server (102).

3. The method of claim 1, wherein the portable entertainment apparatus communicates with the digital entertainment server (102) via a wired cable, and wherein the portable entertainment apparatus (104,106) is within synchronization range when the portable entertainment apparatus is coupled to the wired cable.

4. The method of claim 1, wherein the portable entertainment apparatus (104,106) stores a played list (406) having a list of video content that was previously played by the portable entertainment apparatus (104,106), and wherein the video content is downloaded from the digital entertainment server (102) to the portable entertainment apparatus (104,106) responsive to determining that the video content is now found on the played list.

5. The method of claim 1, wherein the wish list (402) is previously selected by a user.

6. The method of any one of claims 1 to 3, wherein the method further comprises
receiving (524) at the digital entertainment server (102) a user selection of video content to be downloaded from the digital entertainment server (102) to the portable entertainment apparatus (104,106);
determining (520) whether the portable entertainment apparatus (104,106) is within synchronization range from the digital entertainment server (102),
responsive to determining that the portable entertainment apparatus (104,106) is within synchronization range, downloading (526) video content from the digital entertainment server (102) to the portable entertainment apparatus (104,106) according to the user selection.

7. A portable entertainment apparatus (104,106) capable of communicating with a digital entertainment server (102), wherein the digital entertainment server (102) is operable to store video content and an available content list (404), and wherein the portable entertainment apparatus (104,106) is operable to store at least part of the video content stored in the digital entertainment server (102) and a wish list (402) comprising a selection of video content, the portable entertainment apparatus (104,106) comprising:
a communications interface (302) for downloading video content from the digital entertainment server (102);
a storage module (308) for storing the downloaded video content; and
a controller (306) coupled to and operable to control the operations of the communications interface (302) and the storage module (308), wherein the controller (306) is operable to:
determine that the portable entertainment apparatus (104,106) is within synchronisation range from the digital entertainment server (102);
control the communication interface (302) to download from the digital entertainment server (102) video content found on both the wish list (402) and the available content list (404).

8. An entertainment system (100) comprising:
a digital entertainment server (102) storing a plurality of video content; and
a portable entertainment apparatus (104,106) as specified in claim 7.

9. The entertainment system (100) of claim 8, wherein the digital entertainment server (102) comprises:
an input module (202) receiving a multi-channel signal and selecting a first video content of one channel from the multi-channel signal;
an encoder (204) coupled to the input module (202) for receiving the first video content, determining whether the first video content is in analog format, and responsive to the first video content being in analog format, encoding the first video content to a digital format;
a first communications interface (212) for coupling the digital entertainment server (102) to a data communication network, and for receiving a second video content in digital format;
a storage module (210) storing the first and second video content in digital format;
a second communications interface (216) for coupling the digital entertainment server (102) to the portable entertainment apparatus (104,106); and
a controller (208) coupled to and operable to control the operations of the input module (202), the encoder (204), the first (212) and second (216) communications interfaces, and the storage module (210), wherein the controller (208) is operable to cause the second communications interface (216) to transmit video content to the portable entertainment apparatus (104,106) responsive to determining that portable entertainment apparatus (104,106) established a communication link with the digital entertainment server (102).

10. The entertainment system (100) of claim 9, wherein the digital entertainment server (102) further comprises a transcoder (214) coupled to the controller (208) and to the second communications interface (216), and wherein the transcoder (214) is operable to modify the encoding rate of the first and second video content.

11. The entertainment system (100) of claim 8, wherein the portable entertainment apparatus (104,106) further comprises a decoder (312) for decoding the video content stored in the storage module (308).

12. The entertainment system (100) of claim 8, wherein the portable entertainment apparatus (104,106) further comprises a display (314) for displaying the video content stored in the storage module (308).

13. The entertainment system (100) of claim 8, wherein the communications interface is a wireless communication interface connecting the portable entertainment apparatus (104,106) to the digital entertainment server (102) via a wireless communication network, and at least part of the video content stored in the digital entertainment server is downloaded to the portable entertainment apparatus (104,106) via the wireless communication network after the portable entertainment apparatus (104,106) is within a wireless communication range for communicating with the digital entertainment server (102).

14. The entertainment system (100) of claim 8, wherein the portable entertainment apparatus (104,106) communicates with the digital entertainment server (102) via a cradle (108) and a cable connecting the cradle (108) to the digital entertainment server (102), and at least part of the video content stored in the digital entertainment server (102) is downloaded to the portable entertainment apparatus (104,106) via the cable and the cradle (108) automatically when the portable entertainment apparatus (104,106) is coupled to the cradle (108).

15. The portable entertainment apparatus (104,106) of claim 7, wherein the portable entertainment apparatus is handheld and the storage module (308) comprises:
a disk-based storage media integrated to the handheld, wherein the disk-based storage media is operable to store at least one hour of video content encoded in digital format.

16. The portable entertainment apparatus (104,106) of claim 7, further comprising:
a memory (310) for storing the wish list (402) of video content.

17. The portable entertainment apparatus (104,106) of claim 16, wherein the each of the video content on the wish list (402) is given a priority, and wherein the controller (306) is operable to control the communication interface (302) to download from the digital entertainment server (102) video content on the wish list (402) in accordance with the given priority.

18. The portable entertainment apparatus (104,106) of claim 16, wherein the controller (306) is operable to cause the portable entertainment apparatus to establish a communication link with the digital entertainment server (102) at a predetermined interval.

19. The portable entertainment apparatus (104,106) of claim 16, wherein the wish list (402) is updated to delete downloaded video content after the video content on the wish list (402) is downloaded to the portable entertainment apparatus (104,106).

20. The portable entertainment apparatus (104,106) of claim 16, wherein the memory (310) further stores a played list (406) having a list of video content that was previously played by the portable entertainment apparatus (104,106), and wherein the controller (306) is operable to prevent video content on the played list (406) from being downloaded from the digital entertainment server (102).

21. The portable entertainment apparatus (104,106) of claim 16, wherein the controller (306) causes the storage module (308) to delete video content that was previously played.

22. The portable entertainment apparatus (104,106) of claim 21, wherein the video content is deleted from the storage module (308) after a predetermined period of time.

23. The portable entertainment apparatus (104,106) of claim 21, wherein the video content is deleted from the storage module (308) after the video content is played a predetermined number of instances.

24. The portable entertainment apparatus (104,106) of claim 7, wherein the portable entertainment apparatus is adapted for use in conjunction with an external video device (670) including a display module (622) and means (624) for inputting commands, the portable entertainment apparatus (104,106) further comprising:
a decoder module (318) for decoding the video content stored in the storage module (308); and
a display module (314) for displaying the decoded video content;
wherein the storage module (308) further comprises disk-based storage media for storing video content in digital format;
and the controller (306) is further coupled to and operable to control the operations of the disk-based storage media, the display module (314), and the decoder module (318), the controller (306) being operable to cause (i) the decoder module (318) to decode the video content, and (ii) the display module (314) to display the decoded video content in response to a command received from the external device via the communication interface (302).

25. The portable entertainment apparatus (104,106) of claim 24, wherein the display module (314) comprises a liquid crystal display.

26. The portable entertainment apparatus (104,106) of claim 24, further comprises a speaker (316) for producing sound corresponding to the video content displayed on the display module (314).

27. The portable entertainment apparatus (104,106) of claim 7, further comprising:
(a) a dedicated video communications interface (702) for receiving video content and data associated with the video content;
(b) an encoder module (704) for encoding the received video content in digital format;
(c) a decoder module (712) for decoding the encoded video content stored in the storage module (708);
(d) a display module (716) for displaying the decoded video content;
(e) input keys (706) for inputting commands to the portable entertainment apparatus (104,106), the input keys (706) including at least a play button for playing video content, a stop button for stopping playing video content, and a menu button for displaying a list of video content stored in the storage module (708); and
(f) a memory module (714) for storing graphical user interface software, wherein the graphical user interface software is configured to display on the display module (716), in response to activation of the menu button, the list of video content stored in the storage module (708);
wherein the controller comprises:
(g) a processor module (710) for running the graphical user interface software, the processor module (710) being operable to cause (i) the decoder module (712) to decode at least part of the video content stored in the storage module, (ii) the display module (716) to display the decoded video content in response to activation of the play button, and (iii) the display module (716) to stop displaying the video content in response to activation of the stop button.

28. The portable entertainment apparatus of claim 27, wherein at least (a)-(c) and (e)-(f) of the portable entertainment apparatus are integrated into a housing.

29. The portable entertainment apparatus of claim 27, wherein the display module (716) comprises a liquid crystal display.

## Patentansprüche

1. Verfahren zur Synchronisierung von in einem digitalen Entertainment-Server (102) gespeichertem Videoinhalt mit in einer tragbaren Entertainment-Vorrichtung (104, 106) gespeichertem Videoinhalt, wobei die tragbare Entertainment-Vorrichtung (104, 106) eine Wunschliste (402) mit einer Auswahl von Videoinhalt aufweist und wobei der digitale Entertainment-Server (102) eine Liste verfügbaren Inhalts (404) hat,
wobei das Verfahren Folgendes aufweist:
Bestimmung (502), ob die tragbare Entertainment-Vorrichtung (104, 106) innerhalb des Synchrosisationsbereichs mit dem digitalen Entertainment-Server (102) ist;
wobei als Reaktion auf die Feststellung, dass die tragbare Entertainment-Vorrichtung (104, 106) innerhalb des Synchronisationsbereichs ist, Folgendes erfolgt:
Aufbau einer Kommunikationsverbindung mit dem digitalen Entertainment-Server (102);
Empfang (504) der Liste verfügbaren Inhalts (404) vom digitalen Entertainment-Server (102);
Vergleich (506) der Wunschliste (402) mit der Liste verfügbaren Inhalts (404); und
Herunterladen (510) von Videoinhalt, der sowohl in der Wunschliste (402) als auch in der Liste verfügbaren Inhalts (404) gefunden wurde, vom digitalen Entertainment-Server (102) zur tragbaren Entertainment-Vorrichtung (104, 106).

2. Verfahren nach Anspruch 1, wobei die tragbare Entertainment-Vorrichtung (104, 106) mit dem digitalen Entertainment-Server (102) über eine drahtlose Kommunikationsschnittstelle (302) kommuniziert und wobei der Synchronisationsbereich ein drahtloser Kommunikationsbereich zur Kommunikation mit dem digitalen Entertainment-Server (102) ist.

3. Verfahren nach Anspruch 1, wobei die tragbare Entertainment-Vorrichtung (104, 106) mit dem digitalen Entertainment-Server (102) über eine Leitungsverbindung kommuniziert und wobei die tragbare Entertainment-Vorrichtung (104, 106) innerhalb des Synchronisationsbereichs ist, wenn die tragbare Entertainment-Vorrichtung (104, 106) mit der Leitungsverbindung verbunden ist.

4. Verfahren nach Anspruch 1, wobei die tragbare Entertainment-Vorrichtung (104, 106) eine Abspielliste (406) speichert, die eine Liste von Videoinhalt aufweist, der zuvor durch die tragbare Entertainment-Vorrichtung (104, 106) abgespielt worden ist, und wobei der Videoinhalt als Reaktion auf die Feststellung, dass der Videoinhalt nun in der Abspielliste vorliegt, vom digitalen Entertainment-Server (102) zur tragbaren Entertainment-Vorrichtung (104, 106) heruntergeladen wird.

5. Verfahren nach Anspruch 1, wobei die Wunschliste (402) zuvor von einem Benutzer ausgewählt wird.

6. Verfahren nach einem der Ansprüche 1 bis 3, wobei das Verfahren weiter Folgendes aufweist:
Empfang (502) einer vom Benutzer vorgenommenen Auswahl von Videoinhalt beim digitalen Entertainment-Server (102) zum Herunterladen vom digitalen Entertainment-Server (102) zur tragbaren Entertainment-Vorrichtung (104, 106);
Bestimmung (520), ob die tragbare Entertainment-Vorrichtung (104, 106) innerhalb des Synchronisationsbereichs mit dem digitalen Entertainment-Server (102) ist;
als Reaktion auf die Feststellung, dass die tragbare Entertainment-Vorrichtung (104, 106) innerhalb des Synchronisationsbereichs mit dem digitalen Entertainment-Server (102) ist, herunterladen (526) von Videoinhalt vom digitalen Entertainment-Server (102) zur tragbaren Entertainment-Vorrichtung (104, 106) entsprechend der Auswahl des Benutzers.

7. Tragbare Entertainment-Vorrichtung (104, 106), die mit einem digitalen Entertainment-Server (102) kommunizieren kann, wobei der digitale Entertainment-Server (102) betrieben werden kann, um Videoinhalt und eine Liste verfügbaren Inhalts (404) zu speichern und wobei die tragbare Entertainment-Vorrichtung (104, 106) betrieben werden kann, um wenigstens einen Teil des im digitalen Entertainment-Server (102) gespeicherten Videoinhalts zu speichern sowie eine Wunschliste (402), die eine Auswahl von Videoinhalt aufweist, wobei die tragbare Entertainment-Vorrichtung (104, 106) Folgendes aufweist:
eine Kommunikationsschnittstelle (302) für den Download von Videoinhalt vom digitalen Entertainment-Server (102);
ein Speichermodul (308) zum Speichern des heruntergeladenen Videoinhalts; und
eine Steuerungseinrichtung (306), die mit der Kommunikationsschnittstelle (302) und dem Speichermodul (308) verbunden ist und die zur Steuerung ihres Betriebs betrieben werden kann, wobei die Steuerungseinrichtung (306) für folgende Vorgänge betrieben werden kann:
Bestimmung, dass die tragbare Entertainment-Vorrichtung (104, 106) innerhalb des Synchronisationsbereichs mit dem digitalen Entertainment-Server (102) ist;
Steuerung der Kommunikationsschnittstelle (302) zum Herunterladen von Videoinhalt, der sowohl in der Wunschliste (402) als auch in der Liste verfügbaren Inhalts (404) vorliegt, vom digitalen Entertainment-Server (102).

8. Entertainment-System (100), das Folgendes aufweist:
einen digitalen Entertainment-Server (102), der eine Vielzahl von Videoinhalten speichert; und
eine tragbare Entertainment-Vorrichtung (104, 106) entsprechend der Angabe in Anspruch 7.

9. Entertainment-System (100) nach Anspruch 8, wobei der digitale Entertainment-Server (102) Folgendes aufweist:
ein Eingangsmodul (202), das ein Mehrkanalsignal empfängt und einen ersten Videoinhalt von einem Kanal des Mehrkanalsignals auswählt;
eine Codiereinrichtung (204) zum Empfang des ersten Videoinhalts, die mit dem Eingangsmodul (202) gekoppelt ist und die bestimmt, ob der erste Videoinhalt im Analogformat vorliegt, und die als Reaktion auf die Feststellung, dass der erste Videoinhalt im Analogformat vorliegt, den ersten Videoinhalt in ein Digitalformat codiert;
eine erste Kommunikationsschnittstelle (212) zur Kopplung des digitalen Entertainment-Servers (102) mit einem Datenkommunikationsnetzwerk und zum Empfang eines zweiten Videoinhalts in einem Digitalformat;
ein Speichermodul (210), das den ersten und den zweiten Videoinhalt im Digitalformat speichert;
eine zweite Kommunikationsschnittstelle (216) zur Kopplung des digitalen Entertainment-Servers (102) mit der tragbaren Entertainment-Vorrichtung (104, 106); und
eine Steuereinrichtung (208), die mit dem Eingangsmodul (202), der Codiereinrichtung (204), der ersten (212) und der zweiten (216) Kommunikationsschnittstelle und dem Speichermodul (210) gekoppelt ist und die zur Steuerung ihres Betriebs betrieben werden kann, wobei die Steuerungseinrichtung (208) betrieben werden kann, um als Reaktion auf die Feststellung, dass die tragbare Entertainment-Vorrichtung (104, 106) eine Kommunikationsverbindung mit dem digitalen Entertainment-Server (102) aufgebaut hat, die zweite Kommunikationsschnittstelle (216) zu veranlassen, Videoinhalt zur tragbaren Entertainment-Vorrichtung (104, 106) zu übertragen.

10. Entertainment-System (100) nach Anspruch 9, wobei der digitale Entertainment-Server (102) weiter einen mit der Steuerungseinrichtung (208) und mit der zweiten Kommunikationsschnittstelle (216) gekoppelten Transcoder (214) aufweist und wobei der Transcoder (214) betrieben werden kann, um die Codierrate des ersten und zweiten Videoinhalts zu ändern.

11. Entertainment-System nach Anspruch 8, wobei die tragbare Entertainment-Vorrichtung (104, 106) weiter eine Decodiereinrichtung (312) zum Decodieren des im Speichermodul (308) gespeicherten Videoinhalts aufweist.

12. Entertainment-System (100) nach Anspruch 8, wobei die tragbare Entertainment-Vorrichtung (104, 106) weiter eine Anzeige (314) zum Anzeigen des im Speichermodul (308) gespeicherten Videoinhalts aufweist.

13. Entertainment-System (100) nach Anspruch 8, wobei die Kommunikationsschnittstelle eine drahtlose Kommunikationsschnittstelle ist, die die tragbare Entertainment-Vorrichtung (104, 106) über ein drahtloses Kommunikationsnetzwerk mit dem digitalen Entertainment-Server (102) verbindet, und wobei mindestens ein Teil des im digitalen Entertainment-Server gespeicherten Videoinhalts über das drahtlose Kommunikationsnetzwerk zur tragbaren Entertainment-Vorrichtung (104, 106) heruntergeladen wird, wenn die tragbare Entertainment-Vorrichtung (104, 106) innerhalb eines Kommunikationsbereichs zur Kommunikation mit dem digitalen Entertainment-Server (102) ist.

14. Entertainment-System (100) nach Anspruch 8, wobei die tragbare Entertainment-Vorrichtung (104, 106) über eine Halterung (108) und ein Verbindungskabel zwischen der Halterung (108) und dem digitalen Entertainment-Server (102) mit dem digitalen Entertainment-Server (102) kommuniziert und wobei wenigstens ein Teil des im digitalen Entertainment-Server (102) gespeicherten Videoinhalts automatisch über das Kabel und die Halterung (108) in die tragbare Entertainment-Vorrichtung (104, 106) heruntergeladen wird, wenn die tragbare Entertainment-Vorrichtung (104, 106) mit der Halterung (108) gekoppelt ist.

15. Tragbare Entertainment-Vorrichtung (104, 106) nach Anspruch 7, wobei die tragbare Entertainment-Vorrichtung eine Handheld-Einrichtung ist und wobei das Speichermodul (308) Folgendes aufweist:
ein in die Handheld-Einrichtung integriertes plattengestütztes Speichermedium, wobei das plattengestützte Speichermedium betrieben werden kann, um mindestens eine Stunde im Digitalformat codierten Videoinhalt zu speichern.

16. Tragbare Entertainment-Vorrichtung (104, 106) nach Anspruch 7, die weiter Folgendes aufweist:
einen Speicher (310) zum Speichern der Wunschliste (402) mit Videoinhalt.

17. Tragbare Entertainment-Vorrichtung (104, 106) nach Anspruch 16, wobei für jeden der Videoinhalte auf der Wunschliste (402) eine Priorität zugewiesen wird und
wobei die Steuereinrichtung (306) betrieben werden kann, um die Kommunikationsschnittstelle (302) für den Download von Videoinhalt auf der Wunschliste (402) vom digitalen Entertainment-Server (102) entsprechend der zugewiesenen Priorität zu steuern.

18. Tragbare Entertainment-Vorrichtung (104, 106) nach Anspruch 16, wobei die Steuereinrichtung (306) betrieben werden kann, um die tragbare Entertainment-Vorrichtung zu veranlassen, in einem vorbestimmten Intervall eine Kommunikationsverbindung mit dem digitalen Entertainment-Server (102) aufzubauen.

19. Tragbare Entertainment-Vorrichtung (104, 106) nach Anspruch 16, wobei die Wunschliste (402) aktualisiert wird, um heruntergeladenen Videoinhalt zu löschen, nachdem der Videoinhalt auf der Wunschliste (402) zur tragbaren Entertainment-Vorrichtung (104, 106) heruntergeladen worden ist.

20. Tragbare Entertainment-Vorrichtung (104, 106) nach Anspruch 16, wobei der Speicher (310) weiter eine Abspielliste (406) speichert, die eine Liste von Videoinhalt aufweist, der zuvor durch die tragbare Entertainment-Vorrichtung (104, 106) abgespielt worden ist, und wobei die Steuereinrichtung (306) betrieben werden kann, um zu verhindern, dass Videoinhalt auf der Abspielliste (406) vom digitalen Entertainment-Server (102) heruntergeladen wird.

21. Tragbare Entertainment-Vorrichtung (104, 106) nach Anspruch 16, wobei die Steuereinrichtung (306) das Speichermodul (308) veranlasst, zuvor abgespielten Videoinhalt zu löschen.

22. Tragbare Entertainment-Vorrichtung (104, 106) nach Anspruch 21, wobei der Videoinhalt nach einem vorbestimmten Zeitraum aus dem Speichermodul (308) gelöscht wird.

23. Tragbare Entertainment-Vorrichtung (104, 106) nach Anspruch 21, wobei der Videoinhalt aus dem Speichermodul (308) gelöscht wird, nachdem der Videoinhalt mit einer vorbestimmten Anzahl von Abrufen abgespielt worden ist.

24. Tragbare Entertainment-Vorrichtung (104, 106) nach Anspruch 7, wobei die tragbare Entertainment-Vorrichtung zur Verwendung in Verbindung mit einer externen Videoeinrichtung (670) eingerichtet ist, die ein Anzeigemodul (622) und Mittel (624) zur Eingabe von Befehlen aufweist, und wobei die tragbare Entertainment-Vorrichtung (104, 106) weiter Folgendes aufweist:
ein Decodiermodul (318) zum Decodieren des im Speichermodul (308) gespeicherten Videoinhalts; und
ein Anzeigemodul (314) zur Anzeige des decodierten Videoinhalts;
wobei das Speichermodul (308) weiter plattengestützte Speichermedien zum Speichern von Videoinhalten im Digitalformat aufweist;
und wobei die Steuereinrichtung (306) weiter mit den plattengestützten Speichermedien, dem Anzeigemodul (314) und dem Decodiermodul (318) gekoppelt ist und betrieben werden kann, um deren Betrieb zu steuern, und wobei die Steuereinrichtung (306) betrieben werden kann, um (i) das Decodiermodul (318) zu veranlassen, den Videoinhalt zu decodieren, und um (ii) das Anzeigemodul (314) zu veranlassen, in Abhängigkeit von einem über die Kommunikationsschnittstelle (302) von der externen Einrichtung empfangenen Befehl den decodierten Videoinhalt anzuzeigen.

25. Tragbare Entertainment-Vorrichtung (104, 106) nach Anspruch 24, wobei das Anzeigemodul (314) eine Flüssigkristallanzeige aufweist.

26. Tragbare Entertainment-Vorrichtung (104, 106) nach Anspruch 24, die weiter einen Lautsprecher (316) zur Geräuscherzeugung in Zusammenhang mit dem auf dem Anzeigemodul (314) angezeigten Videoinhalt aufweist.

27. Tragbare Entertainment-Vorrichtung (104, 106) nach Anspruch 7, die weiter Folgendes aufweist:
(a) eine dedizierte Videokommunikationsschnittstelle (702) zum Empfang von Videoinhalt und Daten in Zusammenhang mit dem Videoinhalt;
(b) ein Codiermodul (704) zum Codieren des empfangenen Videoinhalts im Digitalformat;
(c) ein Decodiermodul (712) zum Decodieren des im Speichermodul (708) gespeicherten codierten Videoinhalts;
(d) ein Anzeigemodul (716) zur Anzeige des decodierten Videoinhalts;
(e) Eingabetasten (706) zur Eingabe von Befehlen in die tragbare Entertainment-Vorrichtung (104, 106), wobei die Eingabetasten (706) mindestens eine Abspieltaste zum Abspielen von Videoinhalt, eine Stopptaste zum Anhalten des Abspielens von Videoinhalt und eine Menütaste zur Anzeige einer Liste von im Speichermodul (708) gespeichertem Videoinhalt aufweisen; und
ein Memory-Modul (714) zum Speichern von Software der grafischen Benutzerschnittstelle, wobei die Software der grafischen Benutzerschnittstelle konfiguriert ist, um die Liste von im Speichermodul (708) gespeichertem Videoinhalt in Abhängigkeit von der Aktivierung der Menütaste auf dem Anzeigemodul (716) anzuzeigen;
wobei die Steuereinrichtung Folgendes aufweist:
(g) ein Prozessormodul (710) zur Ausführung der Software der grafischen Benutzerschnittstelle, wobei das Prozessormodul (710) betrieben werden kann, um
(i) das Decodiermodul (712) zu veranlassen, mindestens einen Teil des im Speichermodul gespeicherten Videoinhalts zu decodieren; um (ii) das Anzeigemodul (716) zu veranlassen, den decodierten Videoinhalt in Abhängigkeit von der Aktivierung der Abspieltaste anzuzeigen; und um (iii) das Anzeigemodul (716) zu veranlassen, die Anzeige des Videoinhalt in Abhängigkeit von der Aktivierung der Stopptaste anzuhalten.

28. Tragbare Entertainment-Vorrichtung nach Anspruch 27, wobei mindestens die Elemente (a)-(c) und (e)-(f) der tragbaren Entertainment-Vorrichtung in einem Gehäuse integriert sind.

29. Tragbare Entertainment-Vorrichtung nach Anspruch 27, wobei das Anzeigemodul (716) eine Flüssigkristallanzeige aufweist.

## Revendications

1. Méthode de synchronisation d'un contenu vidéo mémorisé dans un serveur de divertissement numérique (102) avec un contenu vidéo mémorisé dans un appareil de divertissement portatif (104, 106), dans laquelle l'appareil de divertissement portatif (104, 106) dispose d'une liste de souhaits (402) comprenant une sélection de contenus vidéo, et dans laquelle le serveur de divertissement numérique (102) dispose d'une liste (404) de contenus disponibles, la méthode comprenant les étapes consistant à :
déterminer (502) si l'appareil de divertissement portatif (104, 106) est dans une plage de synchronisation à partir du serveur de divertissement numérique (102) ;
en réponse à la détermination que l'appareil de divertissement portatif (104, 106) est dans la plage de synchronisation :
établir une liaison de communication avec le serveur de divertissement numérique (102) ;
recevoir (504) la liste (404) des contenus disponibles depuis le serveur de divertissement numérique (102) ;
comparer (506) la liste des souhaits (402) avec la liste (404) des contenus disponibles ; et
télécharger (510) un contenu vidéo trouvé à la fois sur la liste des souhaits (402) et la liste (404) des contenus disponibles depuis le serveur de divertissement numérique (102) vers l'appareil de divertissement portatif (104, 106).

2. Méthode de la revendication 1, dans laquelle l'appareil de divertissement portatif (104, 106) communique avec le serveur de divertissement numérique (102) via une interface (302) de communication sans fil et la plage de synchronisation est une plage de communication sans fil destinée à communiquer avec le serveur de divertissement numérique (102).

3. Méthode de la revendication 1, dans laquelle l'appareil de divertissement portatif communique avec le serveur de divertissement numérique (102) via un câble à fils, et dans laquelle l'appareil de divertissement portatif (104, 106) est dans la plage de synchronisation lorsque l'appareil de divertissement portatif est couplé au câble à fils.

4. Méthode de la revendication 1, dans laquelle l'appareil de divertissement portatif (104, 106) mémorise une liste jouée (406) comprenant une liste de contenus vidéo qui ont été précédemment joués par l'appareil de divertissement portatif (104, 106), et dans laquelle le contenu vidéo est téléchargé depuis le serveur de divertissement numérique (102) vers l'appareil de divertissement portatif (104, 106) en réponse à la détermination que le contenu vidéo n'est pas trouvé sur la liste jouée.

5. Méthode de la revendication 1, dans laquelle la liste de souhaits (402) est sélectionnée au préalable par un utilisateur.

6. Méthode de l'une quelconque des revendications 1 à 3, dans laquelle la méthode comprend en outre les étapes consistant à :
recevoir (524) au serveur de divertissement numérique (102) une sélection de l'utilisateur de contenus vidéo à télécharger depuis le serveur de divertissement numérique (102) vers l'appareil de divertissement portatif (104, 106) ;
déterminer (520) si l'appareil de divertissement portatif (104, 106) est dans une plage de synchronisation à partir du serveur de divertissement numérique (102) ;
en réponse à la détermination que l'appareil de divertissement portatif (104, 106) est dans la plage de synchronisation, télécharger (526) un contenu vidéo depuis le serveur de divertissement numérique (102) vers l'appareil de divertissement portatif (104, 106) selon la sélection de l'utilisateur.

7. Appareil de divertissement portatif (104, 106) capable de communiquer avec un serveur de divertissement numérique (102), dans lequel le serveur de divertissement numérique (102) peut être exploité pour mémoriser des contenus vidéo et une liste (404) de contenus disponibles, et dans lequel l'appareil de divertissement portatif (104, 106) peut être activé pour mémoriser au moins une partie des contenus vidéo mémorisés dans le serveur de divertissement numérique (102) et une liste de souhaits (402) comprenant une sélection de contenus vidéo, l'appareil de divertissement portatif (104, 106) comprenant :
une interface de communication (302) destinée à télécharger un contenu vidéo en provenance du serveur de divertissement numérique (102) ;
un module de mémorisation (308) destiné à mémoriser le contenu vidéo téléchargé ; et
une commande (306) couplée aux- et pouvant être activée pour commander les opérations de l'interface de communication (302) et du module de mémorisation (308), dans lequel la commande (306) peut être activée pour :
déterminer que l'appareil de divertissement portatif (104, 106) est dans une plage de synchronisation à partir du serveur de divertissement numérique (102) ;
commander l'interface de communication (302) pour télécharger depuis le serveur de divertissement numérique (102) un contenu vidéo trouvé à la fois sur la liste des souhaits (402) et la liste (404) des contenus disponibles.

8. Système de divertissement (100) comprenant :
un serveur de divertissement numérique (102) mémorisant plusieurs contenus vidéo ; et
un appareil de divertissement portatif (104, 106) tel que spécifié dans la revendication 7.

9. Système de divertissement (100) de la revendication 8, dans lequel le serveur de divertissement numérique (102) comprend :
un module d'entrée (202) recevant un signal multiplex et sélectionnant un premier contenu vidéo d'un canal particulier à partir du signal multiplex ;
un codeur (204) couplé au module d'entrée (202) destiné à recevoir le premier contenu vidéo, déterminer si le premier contenu vidéo est en un format analogique, et en réponse à la détermination que le premier contenu vidéo est en un format analogique, coder le premier contenu vidéo en un format numérique ;
une première interface de communication (212) destinée à coupler le serveur de divertissement numérique (102) à un réseau de communication de données, et recevoir un second contenu vidéo en un format numérique ;
un module de mémorisation (210) mémorisant les premier et second contenus vidéo en un format numérique ;
une seconde interface de communication (216) destinée à coupler le serveur de divertissement numérique (102) à l'appareil de divertissement portatif (104, 106) ; et
une commande (208) couplée aux- et pouvant être activée pour commander les opérations du module d'entrée (202), du codeur (204), des première (212) et seconde (216) interfaces de communication, et du module de mémorisation (210), dans lequel la commande (208) peut être activée pour provoquer la transmission par la seconde interface de communication (216) d'un contenu vidéo vers l'appareil de divertissement portatif (104, 106) en réponse à la détermination que l'appareil de divertissement portatif (104, 106) a établi une liaison de communication avec le serveur de divertissement numérique (102).

10. Système de divertissement (100) de la revendication 9, dans lequel le serveur de divertissement numérique (102) comprend en outre un transcodeur (214) couplé à la commande (208) et à la seconde interface de communication (216), et dans lequel le transcodeur (214) peut être activé pour modifier la vitesse de codage des premier et second contenus vidéo.

11. Système de divertissement (100) de la revendication 8, dans lequel l'appareil de divertissement portatif (104, 106) comprend en outre un décodeur (312) destiné à décoder le contenu vidéo mémorisé dans le module de mémorisation (308).

12. Système de divertissement (100) de la revendication 8, dans lequel l'appareil de divertissement portatif (104, 106) comprend en outre un afficheur (314) destiné à afficher le contenu vidéo mémorisé dans le module de mémorisation (308).

13. Système de divertissement (100) de la revendication 8, dans lequel l'interface de communication est une interface de communication sans fil connectant l'appareil de divertissement portatif (104, 106) au serveur de divertissement numérique (102) via un réseau de communication sans fil, et au moins une partie du contenu vidéo mémorisé dans le serveur de divertissement numérique est téléchargé vers l'appareil de divertissement portatif (104, 106) via le réseau de communication sans fil après que l'appareil de divertissement portatif (104, 106) soit dans une plage de communication sans fil pour communiquer avec le serveur de divertissement numérique (102).

14. Système de divertissement (100) de la revendication 8, dans lequel l'appareil de divertissement portatif (104, 106) communique avec le serveur de divertissement numérique (102) via un support (108) et un câble reliant le support (108) au serveur de divertissement numérique (102), et au moins une partie du contenu vidéo mémorisé dans le serveur de divertissement numérique (102) est téléchargé vers l'appareil de divertissement portatif (104, 106) via le câble et le support (108) automatiquement lorsque l'appareil de divertissement portatif (104, 106) est couplé au support (108).

15. Appareil de divertissement portatif (104, 106) de la revendication 7, dans lequel l'appareil de divertissement portatif est porté à la main et le module de mémorisation (308) comprend :
une sauvegarde sur disque intégrée à l'appareil portable, dans lequel la sauvegarde sur disque peut être activée pour mémoriser au moins une heure de contenu vidéo codé en un format numérique.

16. Appareil de divertissement portatif (104, 106) de la revendication 7, comprenant en outre :
une mémoire (310) destinée à mémoriser une liste des souhaits (402) de contenus vidéo.

17. Appareil de divertissement portatif (104, 106) de la revendication 16, dans lequel une priorité est donnée à chacun des contenus vidéo figurant sur la liste des souhaits (402), et dans lequel la commande (306) peut être activée pour commander l'interface de communication (302) dans le but de télécharger depuis le serveur de divertissement numérique (102) un contenu vidéo figurant sur la liste des souhaits (402) selon la priorité donnée.

18. Appareil de divertissement portatif (104, 106) de la revendication 16, dans lequel la commande (306) peut être activée pour provoquer l'établissement par l'appareil de divertissement portatif d'une liaison de communication avec le serveur de divertissement numérique (102) à un intervalle prédéterminé.

19. Appareil de divertissement portatif (104, 106) de la revendication 16, dans lequel la liste des souhaits (402) est mise à jour pour effacer un contenu vidéo téléchargé après que le contenu vidéo figurant sur la liste des souhaits (402) ait été téléchargé vers l'appareil de divertissement portatif (104, 106).

20. Appareil de divertissement portatif (104, 106) de la revendication 16, dans lequel la mémoire (310) mémorise en outre une liste jouée (406) comprenant une liste de contenus vidéo qui ont été précédemment joués par l'appareil de divertissement portatif (104, 106), et
dans lequel la commande (306) peut être activée pour empêcher un contenu vidéo figurant sur la liste jouée (406) d'être téléchargé depuis le serveur de divertissement numérique (102).

21. Appareil de divertissement portatif (104, 106) de la revendication 16, dans lequel la commande (306) provoque l'effacement par le module de mémorisation (308) d'un contenu vidéo qui a été précédemment joué.

22. Appareil de divertissement portatif (104, 106) de la revendication 21, dans lequel le contenu vidéo est effacé du module de mémorisation (308) après un laps de temps prédéterminé.

23. Appareil de divertissement portatif (104, 106) de la revendication 21, dans lequel le contenu vidéo est effacé du module de mémorisation (308) après que le contenu vidéo ait été joué un nombre de fois prédéterminé.

24. Appareil de divertissement portatif (104, 106) de la revendication 7, dans lequel l'appareil de divertissement portatif est adapté pour une utilisation en conjonction avec un dispositif vidéo externe (670) comprenant un module d'affichage (622) et un moyen (624) destiné à entrer des commandes, l'appareil de divertissement portatif (104, 106) comprenant en outre :
un module décodeur (318) destiné à décoder le contenu vidéo mémorisé dans le module de mémorisation (308) ; et
un module d'affichage (314) destiné à afficher le contenu vidéo décodé ;
dans lequel le module de mémorisation (308) comprend en outre une sauvegarde sur disque destinée à mémoriser un contenu vidéo dans un format numérique ;
et la commande (306) est en outre couplée aux- et peut être activée pour commander les opérations de la sauvegarde sur disque, du module d'affichage (314), et du module décodeur (318), la commande (306) pouvant être activée pour provoquer (i) un décodage du contenu vidéo par le module décodeur (318), et (ii) un affichage du contenu vidéo décodé par le module d'affichage (314) en réponse à une commande reçue depuis le dispositif externe via l'interface de communication (302).

25. Appareil de divertissement portatif (104, 106) de la revendication 24, dans lequel le module d'affichage (314) comprend un afficheur à cristaux liquides.

26. Appareil de divertissement portatif (104, 106) de la revendication 24, comprenant en outre un haut-parleur (316) destiné à produire un son correspondant au contenu vidéo affiché sur le module d'affichage (314).

27. Appareil de divertissement portatif (104, 106) de la revendication 7, comprenant en outre :
(a) une interface (702) affectée aux communications vidéo destinée à recevoir des contenus vidéo et des données associées aux contenus vidéo ;
(b) un module de codage (704) destiné à coder les contenus vidéo reçus en un format numérique ;
(c) un module décodeur (712) destiné à décoder les contenus vidéo codés mémorisés dans le module de mémorisation (708) ;
(d) un module d'affichage (716) destiné à afficher les contenus vidéo décodés ;
(e) des touches d'entrée (706) destinées à entrer des commandes vers l'appareil de divertissement portatif (104, 106), les touches d'entrée (706) comprenant au moins un bouton de marche destiné à jouer le contenu vidéo, un bouton d'arrêt destiné à arrêter le contenu vidéo en cours, et un bouton de menu destiné à afficher une liste de contenus vidéo mémorisés dans le module de mémorisation (708) ; et
(f) un module de mémoire (714) destiné à mémoriser un logiciel d'interface graphique d'utilisateur, dans lequel le logiciel d'interface graphique d'utilisateur est configuré pour afficher sur le module d'affichage (716), en réponse à une activation du bouton de menu, la liste des contenus vidéo mémorisés dans le module de mémorisation (708) ;
dans lequel la commande comprend :
(g) un module de processeur (710) destiné à activer le logiciel d'interface graphique d'utilisateur, le module de processeur (710) pouvant être activé pour provoquer (i) un décodage par le module décodeur (712) d'au moins une parte du contenu vidéo mémorisé dans le module de mémorisation, (ii) un affichage par le module d'affichage (716) du contenu vidéo décodé en réponse à une activation du bouton de marche, et (iii) un arrêt par le module d'affichage (716) de l'affichage du contenu vidéo en réponse à une activation du bouton d'arrêt.

28. Appareil de divertissement portatif de la revendication 27, dans lequel au moins les éléments (a)-(c) et (e)-(f) de l'appareil de divertissement portatif sont intégrés dans un boîtier.

29. Appareil de divertissement portatif de la revendication 27, dans lequel le module d'affichage (716) comprend un afficheur à cristaux liquides.
